(19) Europäisches Patentamt European Patent Office Office européen des brevets

(11) **EP 4 394 166 B1**

(12) **EUROPEAN PATENT SPECIFICATION**

(45) Date of publication and mention of the grant of the patent:
**24.12.2025 Bulletin 2025/52**

(21) Application number: **23854254.2**

(22) Date of filing: **03.08.2023**

(51) International Patent Classification (IPC):
*F01D 21/12* (2006.01)  *G01D 3/00* (2006.01)
*G21C 17/00* (2006.01)  *F01K 13/02* (2006.01)
*F22B 35/00* (2006.01)  *G21D 3/00* (2006.01)
*G21D 3/08* (2006.01)

(52) Cooperative Patent Classification (CPC):
**F01D 21/12; F01K 13/02; F22B 35/004; G21D 3/001; G21D 3/08;** Y02E 30/00

(86) International application number:
**PCT/CN2023/111055**

(87) International publication number:
**WO 2024/037350 (22.02.2024 Gazette 2024/08)**

(54) **CONTROL METHOD AND SYSTEM FOR ELECTRIC POWER OF STEAM TURBINE GENERATOR OF NUCLEAR POWER PLANT**

STEUERUNGSVERFAHREN UND -SYSTEM FÜR DEN ELEKTRISCHEN STROM EINES DAMPFTURBINENGENERATORS EINES KERNKRAFTWERKS

PROCÉDÉ ET SYSTÈME DE COMMANDE POUR L'ALIMENTATION ÉLECTRIQUE D'UN GÉNÉRATEUR À TURBINE À VAPEUR D'UNE CENTRALE NUCLÉAIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.10.2022 CN 202211242466**

(43) Date of publication of application:
**03.07.2024 Bulletin 2024/27**

(73) Proprietors:
• **China Nuclear Power Engineering Co., Ltd.**
  **Shenzhen, Guangdong 518124 (CN)**
• **China Nuclear Power Design Company Ltd. (Shenzhen)**
  **Shenzhen, Guangdong 518100 (CN)**
• **China General Nuclear Power Corporation**
  **Shenzhen, Guangdong 518026 (CN)**
• **CGN Power Co., Ltd.**
  **Shenzen, Guangdong 518026 (CN)**

(72) Inventors:
• **WANG, Xufeng**
  **Shenzhen, Guangdong 518124 (CN)**
• **LI, Heng**
  **Shenzhen, Guangdong 518124 (CN)**
• **SUN, Wei**
  **Shenzhen, Guangdong 518124 (CN)**
• **SU, Zhaokui**
  **Shenzhen, Guangdong 518124 (CN)**
• **LIU, Xiaoyu**
  **Shenzhen, Guangdong 518124 (CN)**

(74) Representative: **Westphal, Mussgnug & Partner, Patentanwälte mbB**
**Werinherstraße 79**
**81541 München (DE)**

(56) References cited:
CN-A- 103 559 918    CN-A- 107 939 458
CN-A- 108 962 411    CN-A- 110 580 964
CN-A- 112 086 214    CN-A- 113 591 370
CN-A- 114 999 687    CN-A- 115 614 112
RU-C1- 2 376 666     US-A- 5 745 382

EP 4 394 166 B1

**Description**

BACKGROUND OF THE INVENTION

1. Technical Field

The invention relates to the technical field of nuclear power instrument control, in particular to a control method and system for an electric power of a steam turbine generator of a nuclear power plant.

2. Description of Related Art

For the current nuclear power plant, when the electric power of steam turbine generator is given, the thermal efficiency of the unit changes in real time (such as low seawater temperature and high thermal efficiency, whereas low thermal efficiency); because the electric power is controlled by closed loop, the real-time thermal power of primary loop will increase correspondingly when the thermal efficiency decreases, and the real-time thermal power of primary loop will decrease correspondingly when the thermal efficiency increases, which leads to the change of real-time thermal power of primary loop and real-time moving thermal power (real-time moving thermal power refers to the average value of real-time thermal power of primary loop of nuclear power plant in any continuous set time). In order to avoid the operation of nuclear power plant beyond the technical specifications, the operator must appropriately reduce the electric power setting value to leave a certain margin for the thermal power of the primary loop; At the same time, after the thermal efficiency becomes higher (margin becomes larger), the operator will appropriately increase the electric power setting value to improve the economy. This will have two consequences: 1. during a day, the operator needs to manually adjust the electric power setting value many times; 2. the thermal power margin of the primary loop is not effectively utilized, which leads to the poor economy. It has been proved that it is extremely difficult to use traditional PID control on the premise that the cumulative time of real-time thermal power overrun within 8 hours does not exceed the time limit, the real-time moving thermal power within 8 hours does not exceed the time limit, the action times of the actuator are few, and the thermal power margin is fully utilized to improve the economy.

Publications US 5 745 382 A, CN 112 086 214 A and CN 103 559 918 A are considered to be relevant for the present application.

BRIEF SUMMARY OF THE INVENTION

The technical problem to be solved by the invention is at least one defect existing in the prior art, the invention provides a control method and system for an electric power of a steam turbine generator of a nuclear power plant.

The technical proposal adopted by the invention for solving the technical problem is that a control method for an electric power of a steam turbine generator of a nuclear power plant is constructed, which comprises the following steps:

S10, collecting a real-time thermal power of the primary loop in a nuclear power plant;
S20, calculating a real-time moving thermal power of the real-time thermal power in a first set time based on a moving average method;
S30, performing front-end calorific value calculation process according to the real-time moving thermal power and the real-time thermal power to obtain a front-end actual calorific value;
S40, performing calorific value prediction operation according to a preset target average thermal power, the real-time moving thermal power and the front-end actual calorific value to obtain a predicted calorific value;
S50, performing conversion and efficiency correction operations based on the predicted calorific value , and obtaining an electric power setting value for controlling the electric power of the steam turbine generator and then returning to S10.

Preferably, in S30, the front-end calorific value calculation process comprises:

S301, calculating a second moving thermal power of the real-time thermal power in a third set time based on a moving average method; wherein the third set time is equal to a difference of the first set time minus a second set time;
S302, multiplying the real-time moving thermal power by the first set time to obtain a first calorific value;
S303, multiplying the second moving thermal power by the third set time to obtain a second calorific value;
S304, subtracting the second calorific value from the first calorific value to obtain the front-end actual calorific value.

Preferably, in S40, the expression of the predicted calorific value is:

$$Z_m = (\overline{P_0} - \overline{P_{m-1}}) * T + X_m$$

Wherein $Z_m$ is the predicted calorific value, $\overline{P_0}$ is the preset target average thermal power, $P_{m-1}$ is the real-time moving thermal power, T is the first set time, and $X_m$ is the front-end actual calorific value.

Preferably, in S50, the expression of the electric power setting value is:

$$P_s = \frac{Z_m}{\triangle t} * k;$$

Wherein, $P_s$ is the electric power setting value, $Z_m$ is the predicted calorific value, $\triangle t$ is a second set time, and k is a thermal efficiency factor.

Preferably, the S50 further comprises:

acquiring the real-time electric power of the steam turbine generator;
Performing division operation on the data at the same time in the real-time thermal power and the real-time electric power to obtain proportional data;
Calculating a moving proportion coefficient of the proportion data in the second set time based on a moving average method, and the moving proportion coefficient is the thermal efficiency factor.

Preferably, in S50, it also comprises:
Limiting an upper limit value and a lower limit value of the electric power setting value according to a thermal efficiency factor and the preset target average thermal power.

Preferably, the lower limit value of the electric power setting value is expressed as:

$$\begin{cases} P_{smin} = \min(f_\square(k_n), f(k_{n-1})) \\ f(k) = \min(H3, \overline{P_0} + C) * k \end{cases}.$$

Wherein, $P_{smin}$ is the lower limit value of the electric power setting value, function min is the function for taking the minimum value, $k_n$ is the thermal efficiency factor obtained by current calculation, $k_{n-1}$ is the thermal efficiency factor obtained by last calculation, H3 is the maximum value of preset real-time thermal power, $\overline{P_0}$ is the preset target average thermal power, and C is the preset real-time thermal power adjustment amount;

The expression of the upper limit value of the electric power setting value is:

$$P_{smax} = (2 * \overline{P_0} - \min(H3, \overline{P_0} + C)) * (\max(k_n, k_{n-1}));$$

Wherein, $P_{smax}$ is the upper limit value of the electric power setting value, and max is a function taking a maximum value.

Preferably, the S50 further comprises:
Sending the electric power setting value to a power controller of the steam turbine generator based on a setting period; wherein, the setting period is equal to a second set time.

Preferably, the S50 further comprises:
Determining whether the real-time moving thermal power exceeds a preset overshoot band; if so, setting the setting period to one-half of the second set time; otherwise, setting the setting period to the second set time.

Preferably, in S50, the magnitude of the preset overshoot band is 1MW.

Preferably, the control method for an electric power of a steam turbine generator of a nuclear power plant further comprises:
S11, invalidating the electric power setting value and reducing the thermal power of the primary loop immediately, when the accumulative time of the real-time thermal power longer than a preset early warning value exceeds a preset early warning time in the first set time.

The invention also constructs an control system for an electric power of a steam turbine generator of a nuclear power plant, comprising:

A thermal power acquisition unit, which is used for acquiring real-time thermal power of the primary loop in a nuclear power plant;

A first operation unit, which is used for calculating a real-time moving thermal power of the real-time thermal power in a first set time based on a moving average method;

A second operation unit, which is used for calculating the front-end calorific value of the real-time moving thermal power and the real-time thermal power to output a front-end actual calorific value;

A third operation unit, which is used for performing calorific value prediction operation according to a preset target average thermal power, the real-time moving thermal power and the front-end actual calorific value to output a predicted calorific value; the predicted calorific value is used to characterize the actual calorific value required by the steam turbine generator for a second set time thereafter;

A fourth operation unit, which is used for performing conversion and efficiency correction operation based on the predicted calorific value to output an electric power setting value for controlling the electric power of the steam turbine generator.

Preferably, the second operation unit comprises a first moving average module, a first multiplier, a second multiplier and a first subtractor;

The input terminal of the first moving average module is connected with the thermal power acquisition unit to receive the real-time thermal power, the period setting terminal of the first moving average module is used to receive a third set time, and the output terminal of the first moving average module outputs a second moving thermal power; Wherein the third set time is equal to a difference of the first set time minus the second set time;

The first input terminal of the first multiplier is connected with the first operation unit, and the second input terminal of the first multiplier is used for receiving the first set time;

The input terminal of the second multiplier is connected with the output terminal of the first moving average module, and the second input terminal of the second multiplier is used for receiving the third set time;

The minuend input terminal of the first subtractor is connected with the output terminal of the first multiplier, the subtrahend input terminal of the first subtractor is connected with the output terminal of the second multiplier, and the output terminal of the first subtractor outputs the front-end actual calorific value.

Preferably, the third operation unit comprises a second subtractor, a third multiplier and a first adder;

The minuend input terminal of the second subtractor is used for receiving the preset target average thermal power, and the subtrahend input terminal of the second subtractor is connected with the first operation unit;

The first input terminal of the third multiplier is connected with the output terminal of the second subtractor, and the second input terminal of the third multiplier is used for receiving the first set time;

The first input terminal of the first adder is connected with the output terminal of the third multiplier, the second input terminal of the first adder is connected with the second operation unit to receive the front-end actual calorific value, and the output terminal of the first adder outputs the predicted calorific value.

Preferably, the fourth operation unit comprises a first divider, an efficiency correction unit and a fourth multiplier;

The dividend input terminal of the first divider is connected with the third operation unit to receive the predicted calorific value, and the divisor input terminal of the first divider is used to receive a second set time;

The first input terminal of the fourth multiplier is connected with the output terminal of the first divider, the second input terminal of the fourth multiplier is connected with the efficiency correction unit to receive the thermal efficiency factor output by the efficiency correction unit, and the output terminal of the fourth multiplier outputs the electric power setting value.

Preferably, the efficiency correction unit comprises an electric power acquisition unit, a second divider and a second moving average module;

The electric power acquisition unit is used for collecting the real-time electric power of the steam turbine generator;

The dividend input terminal of the second divider is connected with the electric power acquisition unit to receive the real-time electric power, and the divisor input terminal of the second divider is connected with the thermal power acquisition unit to receive the real-time thermal power;

The input terminal of the second moving average module is connected with the output terminal of the second divider, the period setting terminal of the second moving average module is used for receiving the second set time, and the output terminal of the second moving average module outputs the thermal efficiency factor.

Preferably, the control system for an electric power of a steam turbine generator of a nuclear power plant further comprises: a timing setting unit;
The timing setting unit is used for sending the electric power setting value to a power controller of the steam turbine generator based on a setting period.

Preferably, the timing setting unit comprises an instruction unit and a first selection module;

When the real-time moving thermal power does not exceed a preset overshoot band, the instruction unit outputs a selection instruction every time after the third set time and lasts for a certain time; when the real-time moving thermal power exceeds the preset overshoot band, the selection instruction is output every time after a fifth set time and lasts for a certain time; wherein the fifth set time is equal to one-half of the third set time;

The first selection input of the first selection module is connected with the fourth operation unit to receive the electric power setting value, the second selection input of the first selection module is connected with the output of the first selection module, the output of the first selection module can be connected with the power controller of the steam turbine generator, and the selection terminal of the first selection module is connected with the instruction unit to receive the selection instruction.

Preferably, the instruction unit comprises a first comparator, a second comparator, a first OR gate, a NOT gate, an AND gate, a second OR gate, a first pulse module, a second pulse module and a third pulse module;

The non-inverting input terminal of the first comparator is connected with the first operation unit to receive the real-time moving thermal power, and the inverting input terminal of the first comparator is used to receive the upper limit value of the preset overshoot band;

The non-inverting input terminal of the second comparator is used for receiving the lower limit value of the preset overshoot band, and the inverting input terminal of the second comparator is connected with the first operation unit to receive the real-time moving thermal power;

The first input terminal of the first OR gate is connected to the output terminal of the first comparator, the second input terminal of the first OR gate is connected to the output terminal of the second comparator, the output terminal of the first OR gate is connected to the first input terminal of the AND gate through the NOT gate;

The enabling terminal of the first pulse module is used for receiving a high level, the period setting terminal of the first pulse module is used for receiving the second set time, the output terminal of the first pulse module is connected with the second input terminal of the AND gate, and the output terminal of the AND gate is connected with the first input terminal of the second OR gate;

The enabling terminal of the second pulse module is connected with the output terminal of the first comparator, the period setting terminal of the second pulse module is used for receiving the fifth set time, and the output terminal of the second pulse module is connected with the second input terminal of the second OR gate;

The enabling terminal of the third pulse module is connected with the output terminal of the second comparator, the period setting terminal of the third pulse module is used for receiving the fifth set time, and the output terminal of the third pulse module is connected with the third input terminal of the second OR gate;

The output terminal of the second OR gate outputs the selection instruction.

Preferably, the control system for an electric power of a steam turbine generator of a nuclear power plant further comprises: an emergency thermal power reduction unit;

The emergency thermal power reduction unit is used for outputting an emergency stop and temperature reduction instruction for invalidating the electric power setting value and reducing the thermal power of the primary loop when the accumulated time of the real-time thermal power longer than a preset early warning value exceeds a preset early warning time in the first set time.

Preferably, the control system for an electric power of a steam turbine generator of a nuclear power plant, further comprises a timing unit, which comprising a third comparator, a fourth pulse module, a counting module, a fourth comparator and a second selection module;

The non-inverting input terminal of the third comparator is connected with the thermal power acquisition unit to receive real-time thermal power, the inverting input terminal of the third comparator is used to receive a preset early warning value, the output terminal of the third comparator is connected with the first input terminal of the counting module, the enabling terminal of the fourth pulse module is used for receiving a high level, the period setting terminal of the fourth pulse module is used for receiving the first set time, the output terminal of the fourth pulse module is connected with the second input terminal of the counting module, the output terminal of the counting module is connected with the non-inverting input terminal of the fourth comparator and the first selection input terminal of the second selection module, the inverting input terminal of the fourth comparator is connected with the output terminal of the second selection module; The output terminal of the fourth comparator is connected with the selection terminal of the second selection module, the second selection input terminal of the second selection module is connected with the output terminal of the second selection module, and the output terminal of the second selection module is connected with the emergency thermal power reduction unit as an accumulative time output terminal.

The invention has at least the following beneficial effects: providing a control method and system for an electric power of a steam turbine generator of a nuclear power plant. The method comprises the following steps: S10, collecting a real-time thermal power of the primary loop in a nuclear power plant; S20, calculating a real-time moving thermal power of the real-time thermal power in a first set time based on the moving average method; S30, performing front-end calorific value calculation process according to the real-time moving thermal power and the real-time thermal power to obtain a front-end actual calorific value; S40, performing calorific value prediction operation according to a preset target average thermal power, real-time moving thermal power and front-end actual calorific value to obtain predicted calorific value; S50, performing conversion and efficiency correction operation based on the predicted calorific value, and obtaining an electric power setting value for controlling the electric power of the steam turbine generator, and returned to S10. The implementation of the invention can effectively increase the power generation efficiency of the nuclear power plant, improve the economic benefit of the nuclear power plant, change the original manual control of the operator into automatic adjustment on the premise of meeting the technical specification of the nuclear power plant operation, reduce the work burden of the operator, greatly reduce the risk of exceeding the technical specification caused by the operator frequently manually adjusting the electric power setting value, greatly reduce the action times of the executive mechanism, reduce the mechanical wear of the executive mechanism, and play an active role in improving the equipment life and stability of the unit.

BRIEF DESCRIPTION OF THE SEVERAL VIEWS OF THE DRAWINGS

Brief description of that drawing the invention will now be further described by way of embodiment with reference to the accompany drawings in which:

Fig. 1 is a flowchart of a control method for an electric power of a steam turbine generator of a nuclear power plant provided by the present invention;
Fig. 2 is a flowchart of step S30 in the a control method for an electric power of a steam turbine generator of a nuclear power plant provided by the present invention;
Fig. 3 is an example of real-time thermal power acquisition curve of the primary loop provided by the present invention;
Fig. 4 is an example of real-time thermal power acquisition curve of the primary loop provided by the present invention;
Fig. 5 is a first structural schematic diagram of a control system for an electric power of a steam turbine generator of a nuclear power plant provided by the present invention.
Fig. 6 is a second structure schematic diagram of a control system for an electric power of a steam turbine generator of a nuclear power plant provided by the present invention;
Fig. 7 is the third structure schematic diagram of a control system for an electric power of a steam turbine generator of a nuclear power plant provided by the present invention;
Fig. 8 is a structural schematic diagram of a timing unit in a control system for an electric power of a steam turbine generator of a nuclear power plant provided by the present invention.

DETAILED DESCRIPTION OF THE INVENTION

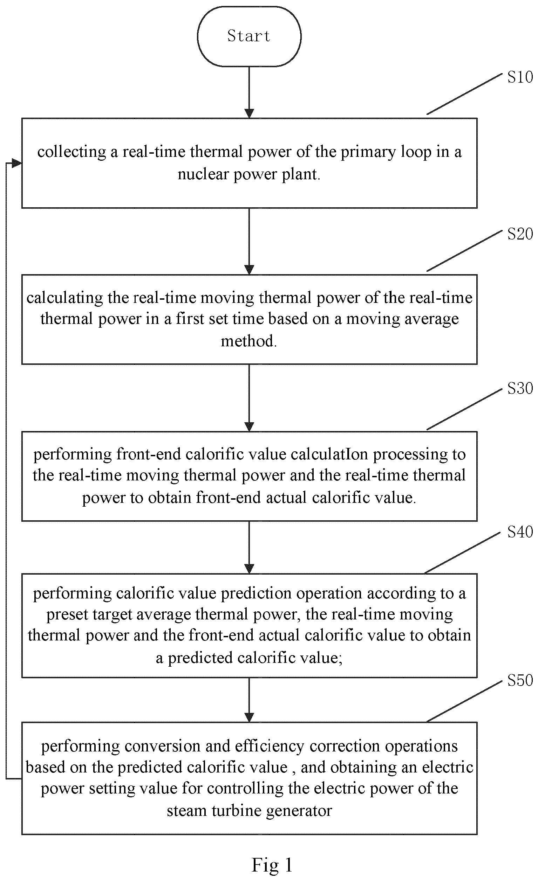

In order to have a clearer understanding of the technical features, objects and effects of the invention, particular embodiments of the invention are described in detail with reference to the accompanying drawings.
Referring to Fig. 1, the present invention provides a control method for a control method for a control method for a control method and system for an electric power of a steam turbine generator of a nuclear power plant. The control method comprises steps S10, S20, S30, S40 and S50.
Step S10 comprises: collecting a real-time thermal power of the primary loop in a nuclear power plant. It should be noted that the real-time thermal power comprises power value and collecting time, so as to prepare for the subsequent steps.
Step S20 comprises: calculating the real-time moving thermal power of the real-time thermal power in a first set time based on a moving average method.
Specifically, by executing step S20, the average value of the real-time thermal power of the primary loop from the time before the first set time to the moment can be obtained. It should be noted that, in principle, the shorter the first set time, it is beneficial to accurately monitor the real-time thermal power of the primary loop and play a positive role in improving the control accuracy of the electric power of the steam turbine generator, but it will cause the equipment to lose and age faster. Therefore, the first set time needs to be set according to the equipment performance and state of the nuclear power plant.

In some embodiments, the first set time may be 8 hours.

Step S30 comprises the following steps: performing front-end calorific value calculation processing to the real-time moving thermal power and the real-time thermal power to obtain front-end actual calorific value; the front-end actual calorific value is used to characterize the total heat generated by the primary loop from the start time of the first set time to a second set time.

Specifically, because the real-time moving thermal power is calculated based on the moving average method, the longer the distance from the acquisition time, the real-time thermal power will be squeezed out first, that is to say, the front-end actual calorific value corresponds to the part of heat that will be pushed out for the second set time.

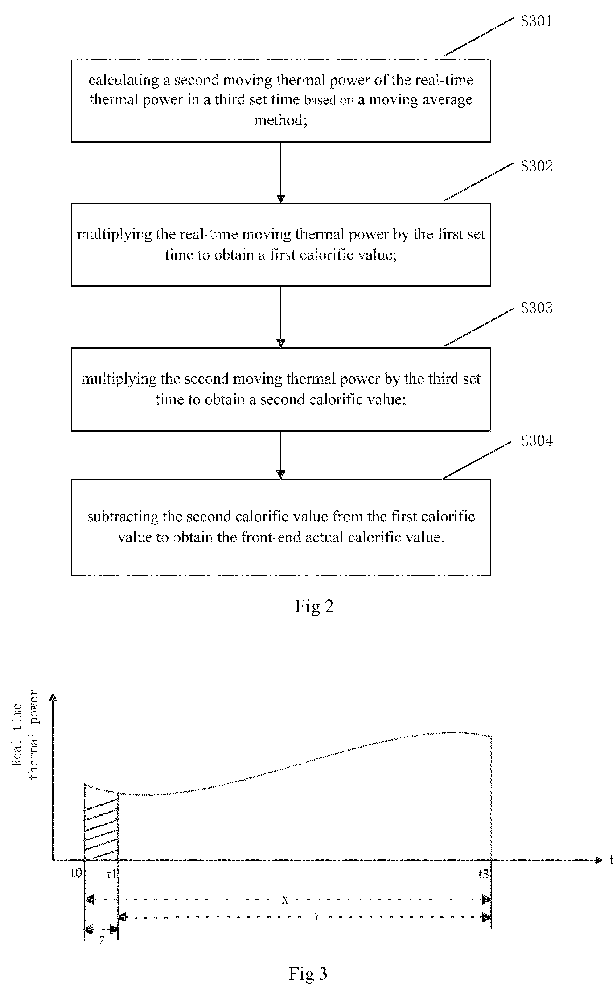

In some embodiments, as shown in Fig. 2, in Step S30, the front-end calorific value calculation process comprises Step S301, Step S302, Step S303, and Step S304.

Step S301 comprises: calculating a second moving thermal power of the real-time thermal power in a third set time based on a moving average method; wherein the third set time is equal to the difference between the first set time and the second set time.

Step S302 comprises: multiplying the real-time moving thermal power by the first set time to obtain a first calorific value.

Step S303 comprises: multiplying a second moving thermal power by a third set time to obtain a second calorific value.

Step S304 comprises: subtracting the second calorific value from the first calorific value to obtain the front-end actual calorific value.

Specifically, as shown in fig. 3, the calculation principle of steps S301 to S304 is as follows: executing step S301 is equivalent to calculating the average value of real-time thermal power of the primary loop from the third set time to the present moment (i.e. t1-t3). Executing step S303 is equivalent to calculating the total calorific value X (i.e. the first calorific value) of the primary loop in the previous first set time (i.e. t0-t3). Executing step S303 corresponds to calculating the calorific value Y (second calorific value) of the primary loop in the previous third set time (i.e. t1-t3). Since the third set time is equal to the difference of the first set time minus the second set time, the calorific value obtained by subtracting the second calorific value from the first set time is equivalent to the total heat Z (front-end actual calorific value) generated by the primary loop from the start time of the first set time to the second set time (i.e., t0-t1).

Step S40 comprises: performing calorific value prediction operation according to the preset target average thermal power, the real-time moving thermal power and the front-end actual calorific value to obtain the predicted calorific value. The predicted calorific value is used to characterize the actual calorific value required by the steam turbine generator for a second set time thereafter;

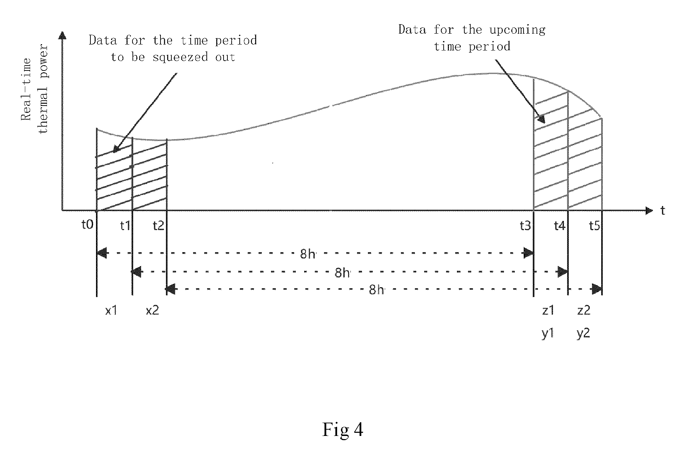

Fig. 4 shows the real-time thermal power acquisition curve of the primary loop of a certain unit. Referring to fig. 4, it is assumed that the preset target average thermal power is $\overline{P_0}$, the first set time is T and $P_t$ is real-time thermal power measurement function, so we can get: $\overline{P_0} = \dfrac{\int_{t0}^{t3} P_t * dt}{T}$ ;

For a first set time period (t0-t3) that has occurred, the total thermal power of a second set time period (t0-t1) to be extruded out is x1, and x1 can be calculated in combination with the collected real-time thermal power:

$$x1 = \int_{t0}^{t3} P_t * dt - \int_{t1}^{t3} P_t * dt ;$$

For the next impending first set time (t1-t4), the corresponding real-time moving thermal power is $\overline{P_1}$, and the following results are obtained: $\overline{P_1} = \dfrac{\int_{t1}^{t4} P_t * dt}{T}$ ;

For a second set time period (t3-t4) to be entered, the target total heat is z1, and if $\overline{P_1}=\overline{P_0}$, z1=x1. Although a time period (t3-t4) to be entered will be controlled with z1 as the target value, due to the influence of the change of thermal efficiency of the unit, the actual total thermal power of the time period (t3-t4) is y1, and z1 and y1 are not necessarily equal, which leads to $\overline{P_1}$ and $\overline{P_0}$ are not necessarily equal. The real-time moving thermal power corresponding to the next set time period (t2-t5) to be entered is $\overline{P_2}$. To make $\overline{P_1}=\overline{P_0}$, z2 should be controlled as the target value in the second set time period (t4-t5) to be entered, and the following results are obtained: $\overline{P_0}$ * T = $\overline{P_1}$ * T - x2 + z2; Therefore, the formula (1) can be obtained by conversion:

$$z2 = (\overline{P_0} - \overline{P_1}) * T + x2 ;$$

Furthermore, assuming that the corresponding real-time moving thermal power for any first set time is $\overline{P_m}$, and to make $\overline{P_m}=\overline{P_o}$, for a second set time period to be entered, combined with formula (1), the expression of predicted calorific value can be deduced as follows:

$$Z_m = (\overline{P_0} - \overline{P_{m-1}}) * T + X_m;$$

Where $Z_m$ is a predicted calorific value, $\overline{P_0}$ is a preset target average thermal power, $\overline{P_{m-1}}$ is a real-time moving thermal power, T is a first set time, and $X_m$ is a front-end actual calorific value.

Step S50 comprises: performing conversion and efficiency correction operations based on the predicted calorific value, obtaining an electric power setting value for controlling the electric power of the steam turbine generator, and returning to step S10. Specifically, the purpose of conversion and efficiency correction operation is: firstly, the predicted calorific value is converted to obtain the basic value for controlling the electric power of steam turbine generator, and then the basic value is corrected, so as to eliminate the influence of thermal efficiency on the accuracy of electric power control of steam turbine generator as much as possible.

In some embodiments, the expression for the electrical power setting is:

$$P_s = \frac{Z_m}{\triangle t} * k;$$

Wherein, $P_s$ is an electric power setting value, $Z_m$ is a predicted calorific value, $\triangle t$ is a second set time, and k is a thermal efficiency factor.

Further, in some embodiments, Step S50 also comprises a calculation method of the thermal efficiency factor, which accurately obtains the thermal efficiency factor by real-time monitoring the variation rule of the real-time electric power and the real-time thermal power of the steam turbine generator, specifically comprising: firstly, collecting the real-time electric power of the steam turbine generator. Then, the data of real-time thermal power and real-time electric power at the same time are divided to obtain proportional data. Finally, based on the moving average method, a moving proportion coefficient of the proportion data in a second set time is calculated, and the moving proportion coefficient is set as a thermal efficiency factor.

In order to avoid oscillation of the electric power setting value, and when the oscillation magnitude is likely to increase, the preset target average thermal power remains constant, in some examples, step S50 further comprises limiting the upper and lower limits of the electric power setting value according to the thermal efficiency factor and the preset target average thermal power after calculating the electric power setting value.

Further, in some embodiments, the upper limit value of the electric power setting value may be calculated by the following expression:

$$\begin{cases} P_{smin} = \min(f_{\square}(k_n), f(k_{n-1})) \\ \ f(k) = \min(H3, \overline{P_0} + C) * k \end{cases}.$$

Wherein, $P_{smax}$ is the lower limit value of the electric power setting value. The function min is the function for taking the minimum value, that is, the function min is used to output the smaller value of H3 and $(\overline{P_0} + C)$; $k_n$ is the thermal efficiency factor currently calculated; $k_{n-1}$ is the thermal efficiency factor obtained from the previous calculation; H3 is the preset real-time thermal power maximum value, which can be set by the staff; $\overline{P_0}$ is the average thermal power of the target; C is the preset real-time thermal power adjustment amount, which can be set by the staff.

Further, in some embodiments, the lower limit value of the electric power setting value may be calculated by the following expression:

$$P_{smin} = (2 * \overline{P_c} - \min(H3, \overline{P_0} + C)) * \max(k_n, k_{n-1});$$

Where $P_{smin}$ is the lower limit of the electric power setting value; max is a function that takes the maximum value, that is, the function max is used to output the larger value of $k_n$ and $k_{n-1}$.

It should be noted that, the thermal efficiency factor is calculated based on the moving average method, and it is a value that changes with the change of the working process of the steam turbine generator, so the upper limit value and the lower limit value of the electric power setting value also change dynamically, and the setting principle of the upper limit value and the lower limit value of the electric power setting value is to make the electric power setting value closer to the preset target average thermal power and avoid the loss of control of the electric power setting value.

In some embodiments, step S50 further comprises: sending the electrical power setting value to the power controller of the steam turbine generator based on the set period to reduce the number of actuator actions or adjustments caused when the steam turbine generator performs electrical power adjustment, thereby reducing mechanical wear of these actuators and playing a positive role in improving the equipment life and stability of the unit. In this embodiment, the setting period is equal to the first set time.

In order to avoid thermal efficiency reduction between the primary loop and the steam turbine generator due to the real-time moving thermal power overshoot, in some embodiments, step S50 further comprises: determining whether the real-time moving thermal power exceeds the preset overshoot band, if so, setting the set period to one-half of the second set time, otherwise setting the set period to the second set time. The purpose of step S50 is to shorten the setting period, thereby improving the response speed of the electric power control loop and making the real-time moving thermal power return to the preset overshoot band as soon as possible. It will be understood that the set period will be set to a second set time when the real-time moving thermal power does not exceed the preset overshoot band.

Optional, the magnitude of the preset overshoot band is 1MW.

In some embodiments, the control method for an electric power of a steam turbine generator of a nuclear power plant further comprises the following steps: Step S11: If the cumulative duration of the real-time thermal power greater than the preset warning value in the first set time exceeds the preset warning time, invalidating the electric power setting value and reducing the thermal power of the primary loop immediately. Specifically, when the step S11 is executed, the real-time thermal power over-limit accumulative time in the first set time can be avoided, and the electric power setting value is invalidated, so that the real-time thermal power is increased or the accumulative time is continuously prolonged due to the adjustment of the electric power setting value, so as to avoid the long-time overload operation of the primary loop and the unexpected failure of the primary loop, thereby improving the stability and safety of the unit.

Optional, when the preset warning value is set to 1.0017 times of the rated power value, the preset warning time corresponds to 60 minutes.

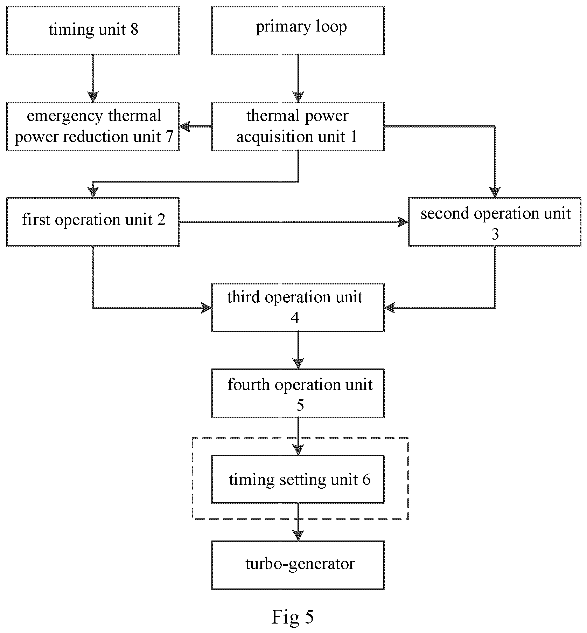

Referring to Fig. 5, the invention also provides a control system for an electric power of a steam turbine generator of a nuclear power plant comprising a thermal power acquisition unit 1, a first operation unit 2, a second operation unit 3, a third operation unit 4 and a fourth operation unit 5.

The thermal power acquisition unit 1 is used for collecting the real-time thermal power of the primary loop in a nuclear power plant. Specifically, the thermal power acquisition unit 1 can be a functional module for collecting real-time thermal power in the primary loop monitoring system of the nuclear power plant.

The first operation unit 2 is used for calculating the real-time moving thermal power of the real-time thermal power in the first set time based on a moving average method.

In some embodiments, the first operation unit 2 comprises a third moving average module, an input of the third moving average module is connected to the thermal power acquisition unit 1 to receive real-time thermal power, and a period setting terminal of the third moving average module for receiving a first set time.

The second operation unit 3 is used for calculating the front-end calorific value of the real-time moving thermal power and the real-time thermal power to output the front-end actual calorific value; The front-end actual calorific value is used to characterize the total heat generated by the primary loop from the start time of the first set time to the second set time.

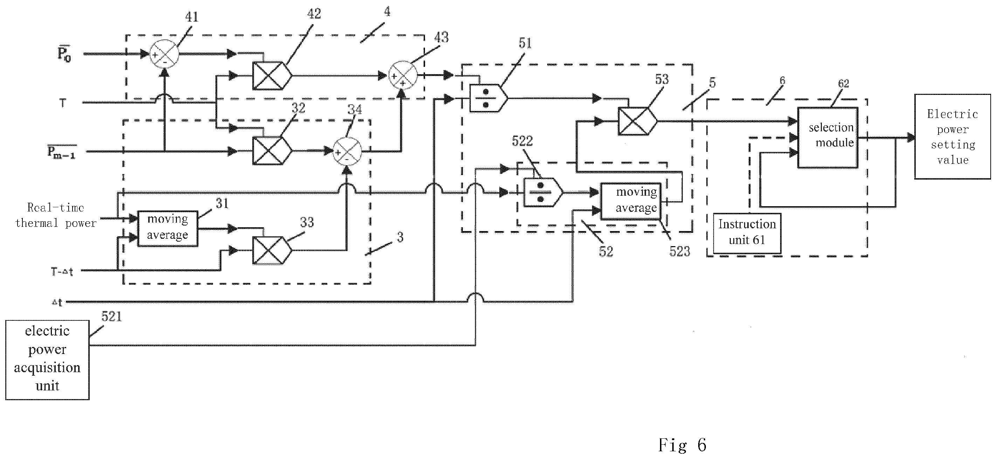

In some embodiments, as shown in fig. 6, the second operation unit 3 comprises a first moving average module 31, a first multiplier 32, a second multiplier 33, and a first subtractor 34;

Specifically, the input terminal of the first moving average module 31 is connected with the thermal power acquisition unit 1 to receive real-time thermal power, the period setting terminal of the first moving average module 31 is used to receive a third set time, and the output terminal of the first moving average module 31 outputs a second moving thermal power; Wherein, the third set time is equal to the difference between the first set time and the second set time; The first input terminal of the first multiplier 32 is connected with the first operation unit 2, and the second input terminal of the first multiplier 32 is used for receiving the first set time; The input terminal of the second multiplier 33 is connected with the output terminal of the first moving average module 31, and the second input terminal of the second multiplier 33 is used for receiving the third set time; The minuend input terminal of the first subtractor 34 is connected to the output terminal of the first multiplier 32, the subtrahend input terminal of the first subtractor 34 is connected to the output terminal of the second multiplier 33, and the output terminal of the first subtractor 34 outputs the front-end actual calorific value.

The third operation unit 4 is used for performing calorific value prediction operation according to the preset target average thermal power, the real-time moving thermal power and the front-end actual calorific value to output the predicted calorific value. The predicted calorific value is used to characterize the actual calorific value required by the steam turbine generator for a second set time thereafter.

In some embodiments as shown in fig. 6, the third operation unit 4 comprises a second subtractor 41, a third multiplier 42 and a first adder 43;

Specifically, the minuend input terminal of the second subtractor 41 is used for receiving the preset target average thermal power, and the subtrahend input terminal of the second subtractor 41 is connected with the first operation unit 2;

The first input terminal of the third multiplier 42 is connected to the output terminal of the second subtractor 41, and the second input terminal of the third multiplier 42 is used for receiving the first set time;

The first input terminal of the first adder 43 is connected to the output terminal of the third multiplier 42, the second input terminal of the first adder 43 is connected to the second operation unit 3 to receive the front-end actual calorific value, and the output terminal of the first adder 43 outputs the predicted calorific value.

A fourth operation unit 5 performs conversion and efficiency correction operation based on the predicted calorific value to output an electric power setting value for controlling the electric power of the steam turbine generator.

In some embodiments as shown in fig. 6 , the fourth operation unit 5 comprises a first divider 51, an efficiency correction unit 52 and a fourth multiplier 53;

The dividend input of the first divider 51 is connected to the third operation unit 4 to receive the predicted calorific value, and the divisor input of the first divider 51 is used to receive the second set time;

A first input terminal of the fourth multiplier 53 is connected to an output terminal of the first divider 51, a second input terminal of the fourth multiplier 53 is connected to the efficiency correction unit 52 to receive a thermal efficiency factor output from the efficiency correction unit 52, and an output terminal of the fourth multiplier 53 outputs an electric power setting value.

In some examples as shown in Fig. 6, the efficiency correction unit 52 comprises an electric power acquisition unit 521, a second divider 522 and a second moving average module 523;

Specifically, the electric power acquisition unit 521 is used for a acquiring real-time electric power of the steam turbine generator;

The dividend input of the second divider 522 is connected to the electric power acquisition unit 521 to receive real-time electric power, and the divisor input of the second divider 522 is connected to a thermal power acquisition unit 1 to receive real-time thermal power;

The input terminal of the second moving average module 523 is connected with the output terminal of the second divider 522, the period setting terminal of the second moving average module 523 is used for receiving the second set time, and the output terminal of the second moving average module 523 outputs the thermal efficiency factor.

In some examples, as shown in fig. 5, the control system for an electric power of a steam turbine generator of a nuclear power plant further comprises: a timing setting unit 6; the timing setting unit 6 is used for sending the electric power setting value to the power controller of the steam turbine generator based on the setting period.

In some examples as shown in fig. 6, the timing setting unit 6 comprises an instruction unit 61 and a first selection module 62;

Specifically, when the real-time moving thermal power does not exceed the preset overshoot band, the instruction unit 61 outputs a selection instruction every time after a third set time and lasts for a certain time; When the real-time moving thermal power exceeds the preset overshoot band, the selection instruction is output every time after a fifth set time and lasts for a certain time; Wherein, the fifth set time is equal to one-half of the third set time;

The first selection input of the first selection module 62 is connected to the fourth operation unit 5 to receive the electric power setting value, the second selection input of the first selection module 62 is connected to the output of the first selection module 62, the output of the first selection module 62 can be connected to the power controller of a steam turbine generator, and the selection terminal of the first selection module 62 is connected to the instruction unit 61 to receive a selection instruction.

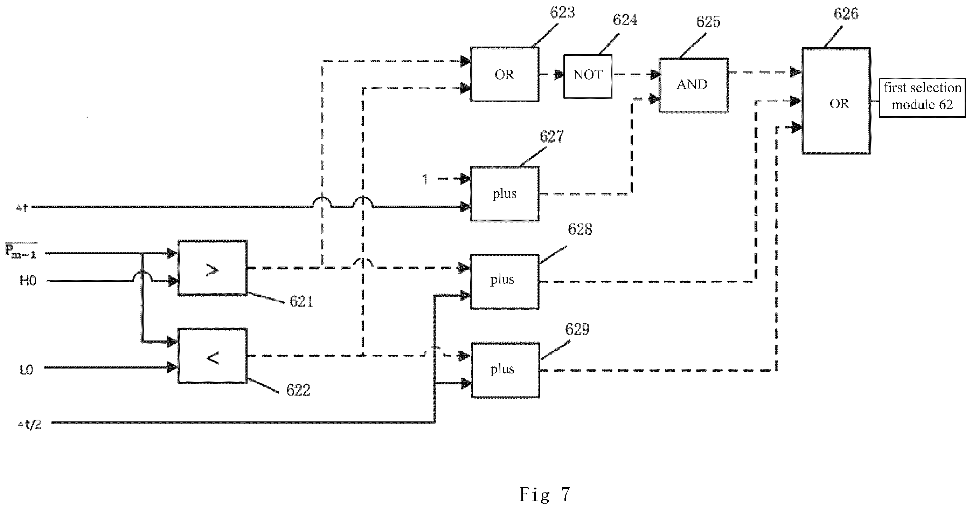

In some examples, as shown in fig. 7, the instruction unit 61 comprises a first comparator 621, a second comparator 622, a first OR gate 623, a NOT gate 624, an AND gate 625, a second OR gate 626, a first pulse module 627, a second pulse module 628, and a third pulse module 629;

Specifically, the non-inverting input terminal of the first comparator 621 is connected to the first operation unit 2 to receive the real-time moving thermal power, and the inverting input terminal of the first comparator 621 is used to receive the upper limit value of the preset overshoot band;

The non-inverting input terminal of the second comparator 622 is used for receiving the lower limit value of the preset overshoot band, and the inverting input terminal of the second comparator 622 is connected with the first operation unit 2 to receive the real-time moving thermal power;

The first input of a first OR gate 623 is connected to the output of the first comparator 621, the second input of the first OR gate 623 is connected to the output of the second comparator 622, and the output of the first OR gate 623 is connected to the first input of the AND gate 625 through the NOT gate 624;

The enabling terminal of the first pulse module 627 is used for receiving a high level, the period setting terminal of the first pulse module 627 is used for receiving a second set time, the output terminal of the first pulse module 627 is connected to the second input terminal of the AND gate 625, and the output terminal of the AND gate 625 is connected to the first input terminal of the second OR gate 626;

The enabling terminal of the second pulse module 628 is connected to the output terminal of the first comparator 621, the period setting terminal of the second pulse module 628 is used for receiving the fifth set time, and the output terminal of the second pulse module 628 is connected to the second input terminal of the second OR gate 626;

The enabling terminal of the third pulse module 629 is connected to the output terminal of the second comparator 622, the period setting terminal of the third pulse module 629 is used for receiving the fifth set time, and the output terminal of the third pulse module 629 is connected to the third input terminal of the second OR gate 626;

The output of the second OR gate 626 outputs a selection instruction.

In some examples, as shown in fig. 5, the acontrol system for an electric power of a steam turbine generator of a nuclear power plant further comprises: an emergency thermal power reduction unit 7. Specifically, the emergency thermal power reduction unit 7 is used for outputting an emergency stop and temperature reduction instruction for invalidating the electric power setting value and reducing the thermal power of the primary loop when the accumulated time when the real-time thermal power is greater than the set warning value in the first set time exceeds the set warning time.

In some embodiments, as shown in Fig. 4, the a control system for an electric power of a steam turbine generator of a nuclear power plant further comprises a timing unit 8. The timing unit 8 is connected with the emergency thermal power reduction unit 7, and is used for calculating the cumulative time when the real-time thermal power is greater than the set warning value.

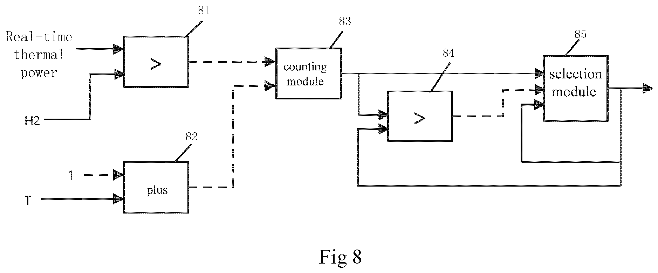

Further in some embodiments as shown in fig. 8 the timing unit 8 comprises a third comparator 81, a fourth pulse module 82, a counting module 83, a fourth comparator 84 and a second selection module 85.

Specifically, the non-inverting input terminal of the third comparator 81 is connected with the thermal power acquisition unit 1 to receive real-time thermal power, the inverting input terminal of the third comparator 81 is used to receive the preset warning value, the output terminal of the third comparator 81 is connected with the first input terminal of the counting module 83, the enabling terminal of the fourth pulse module 82 is used to receive a high level, the period setting terminal of the fourth pulse module 82 is used to receive the first set time, the output terminal of the fourth pulse module 82 is connected with the second input terminal of the counting module 83, the output terminal of the counting module 83 is connected with the non-inverting input terminal of the fourth comparator 84 and the first selection input terminal of the second selection module 85, the inverting input terminal of the fourth comparator 84 is connected with the output terminal of the second selection module 85, and the output terminal of the second selection module 85 is connected to the emergency thermal power reduction unit 7 as the cumulative time output terminal.

It should be noted that the working principle of the moving average module (including the first, second and third moving average modules) is to take the time input at the period setting end as the moving period, carry out moving average operation on the input data at the input terminal, and finally output the average value at its output terminal. For example, the input data of two consecutive cycles are 1, 2, 3 and 4 in turn, and the number of input data in each cycle is 3. The output value obtained by moving average operation in the first cycle is (1 +2 +3) /3=2. Similarly, the output value obtained in the next cycle is (2 +3 +4) /3=3.

The working principle of the selection module (including the first and second selection modules) is as follows: when the selection terminal of the selection module is true (high level), the output terminal of the selection module outputs the value of the first selection input terminal; When the selection terminal of the selection module is false (low level), the output terminal of the selection module outputs the value of its second selection input terminal.

The working principle of the pulse module (including the first, second and third pulse modules) is as follows: when the enabling terminal of the pulse module is true (high level), the pulse signal with a fixed length (1 second) is output according to the time period input by the period setting terminal; When the enabling terminal of the pulse module is false (low level), the pulse module does not generate a pulse signal.

The working principle of the counting module is as follows: when the second input terminal of the counting module is false (low level), if the first input terminal of the counting module is true (high level), the counting module increases every 1 second from 0, if the first input terminal of the counting module is false (low level), the counting module stops increasing and maintains the counting at the previous moment; When the second input terminal is true (high level), the output terminal of the calculation module is reset to 0.

Understandably, the implementation of the invention can effectively increase the power generation efficiency of the nuclear power plant, improve the economic benefits of the nuclear power plant, change the original manual control of the operator into automatic adjustment on the premise of meeting the technical specifications for the operation of the nuclear power plant, reduce the work burden of the operator, greatly reduce the risk of exceeding the technical specifications caused by the frequent manual adjustment of the electric power setting value by the operator, greatly reduce the action times of the executive mechanism, reduce the mechanical wear of the executive mechanism, and play an active role in improving the equipment life and stability of the unit.

Embodiments in this specification are described in a progressive manner and each embodiment focuses on differences from other embodiments. Same and similar parts between the embodiments can be referred to each other. As for the apparatus disclosed in the embodiment, since it corresponds to the method disclosed in the embodiment, the description is relatively simple, and the relevant parts can be described in the method section.

Skilled artisans may further appreciate that the elements and algorithmic steps of each example described in connection with the embodiments disclosed herein can be implemented in electronic hardware, computer software, or a combination of both, and the composition and steps of each example have been described functionally generally in the above description in order to clearly illustrate interchangeability of hardware and software. Whether these functions are performed in hardware or software depends on the specific application and design constraints of the technical scheme. Skilled artisans may use different methods for each particular application to implement the described functionality but such implementation should not be considered outside the scope of the present invention, as defined by the appended claims.

The steps of the method or algorithm described in connection with the embodiments disclosed herein may be implemented directly in hardware, a software module executed by a processor, or a combination of both. The software module may be placed in random access memory (RAM), memory, read only memory (ROM), electrically programmable ROM, electrically erasable programmable ROM, registers, hard disk, removable disk, CD-ROM, or any other form of storage medium known in the art.

**Claims**

1. A control method for an electric power of a steam turbine generator of a nuclear power plant, comprising the steps of:

   S10, collecting real-time thermal power of the primary loop in a nuclear power plant;
   S20, calculating the real-time moving thermal power of the real-time thermal power within a first set time based on a moving average method;
   S30, performing front-end calorific value calculation process according to the real-time moving thermal power and the real-time thermal power to obtain front-end actual calorific value;
   S40, performing calorific value prediction operation according to a preset target average thermal power, the real-time moving thermal power and the front-end actual calorific value to obtain a predicted calorific value;
   and S50, performing conversion and efficiency correction calculation based on the predicted calorific value to obtain an electric power setting value for controlling the electric power of the steam turbine generator, and returning to S10.

2. The control method for an electric power of a steam turbine generator of a nuclear power plant according to claim 1, wherein in S30, the front-end calorific value calculation process comprises:

   S301: calculating a second moving thermal power of the real-time thermal power within a third set time based on a moving average method, wherein the third set time is equal to a difference of the first set time minus a second set time;
   S302, multiplying the real-time moving thermal power by the first set time to obtain a first calorific value;
   S303: multiplying the second moving thermal power by the third set time to obtain a second calorific value;
   S304: subtracting the second calorific value from the first calorific value to obtain the front-end actual calorific value.

3. The control method for an electric power of a steam turbine generator of a nuclear power plant according to claim 2, wherein in S40, the expression of the predicted calorific value is:

$$Z_m = (\overline{P_0} - \overline{P_{m-1}}) * T + X_m;$$

   Wherein $Z_m$ is the predicted calorific value, $\overline{P_0}$ is the preset target average thermal power, $P_{m-1}$ is the real-time moving thermal power, T is the first set time, and $X_m$ is the front-end actual calorific value.

4. The control method for an electric power of a steam turbine generator of a nuclear power plant according to claim 1, wherein in S50, the expression of the electric power setting value is:

$$P_s = \frac{Z_m}{\triangle t} * k \;;$$

Where $P_s$ is the electric power setting value, $Z_m$ is the predicted calorific value. $\triangle t$ is a second set time, and k is a thermal efficiency factor.

5. The control method for an electric power of a steam turbine generator of a nuclear power plant according to claim 4, wherein S50 further comprises:

   acquiring the real-time electric power of the steam turbine generator;
   performing division operation on the data at the same moment in the real-time thermal power and the real-time electric power to obtain proportion data;
   calculating a moving proportion coefficient of the proportion data in the second set time based on a moving average method, and the moving proportion coefficient being the thermal efficiency factor.

6. The control method for an electric power of a steam turbine generator of a nuclear power plant according to claim 5, wherein the step S50 further comprises:
   limiting an upper limit value and a lower limit value of the electric power setting value according to a thermal efficiency factor and the preset target average thermal power.

7. The control method for an electric power of a steam turbine generator of a nuclear power plant according to claim 6, wherein the lower limit value of the electric power setting value is expressed by:

$$\begin{cases} P_{smin} = \min(f\ (k_n), f(k_{n-1})) \\ f(k) = \min(H3, \overline{P_0} + C) * k \end{cases} ;$$

   wherein, $P_{smin}$ is the lower limit value of the electric power setting value, function min is the function for taking the minimum value, $k_n$ is the thermal efficiency factor obtained by current calculation, $k_{n-1}$ is the thermal efficiency factor obtained by last calculation, H3 is the maximum value of preset real-time thermal power, $\overline{P_0}$ is the preset target average thermal power, and C is a preset real-time thermal power regulation amount;
   the expression of the upper limit value of the electric power setting value is:

$$P_{smax} = (2 * \overline{P_0} - \min(H3, \overline{P_0} + C)) * \max(k_n, k_{n-1}) \;;$$

   wherein, $P_{smax}$ is the upper limit value of the electric power setting value, and the max is a function of taking a maximum value.

8. The control method for an electric power of a steam turbine generator of a nuclear power plant according to claim 1, wherein the step S50 further comprises:
   sending the electric power setting value to a power controller of the steam turbine generator based on a setting period;
   wherein the setting period is equal to a second set time.

9. The control method for an electric power of a steam turbine generator of a nuclear power plant according to claim 8, wherein S50 further comprises:
   determining whether the real-time moving thermal power exceeds a preset overshoot band, if so, setting the setting period to be one half of the second set time, otherwise, setting the setting period to be the second set time.

10. The control method for an electric power of a steam turbine generator of a nuclear power plant according to claim 1, further comprising:
    S11, invalidating the electric power setting value and reducing the thermal power of the primary loop immediately, when the accumulative time of the real-time thermal power longer than a preset early warning value exceeds a preset early warning time in the first set time.

11. A control system for an electric power of a steam turbine generator of a nuclear power plant, comprising:

    a thermal power acquisition unit (1), which is used for acquiring the real-time thermal power of the primary loop in a nuclear power plant;

a first operation unit (2), which is used for calculating the real-time moving thermal power of the real-time thermal power within a first set time based on a moving average method;

a second operation unit (3), which is used for calculating the front-end calorific value of the real-time moving thermal power and the real-time thermal power to output a front end actual calorific value;

a third operation unit (4), which is used for performing calorific value prediction operation according to a preset target average thermal power, the real-time moving thermal power and the actual calorific value of the front end to output a predicted calorific value;

a fourth operation unit (5), which is used for performing conversion and efficiency correction operations base on the predicted calorific value to output an electric power setting value for controlling the electric power of the steam turbine generator.

12. The control system for an electric power of a steam turbine generator of a nuclear power plant according to claim 11, wherein the second operation unit (3) comprises a first moving average module (31), a first multiplier (32), a second multiplier (32), and a first subtractor (34);

the input terminal of the first moving average module (31) is connected to the thermal power acquisition unit (1) to receive the real-time thermal power, the period setting terminal of the first moving average module (31) is used to receive a third set time, and the output terminal of the first moving average module (31) outputs a second moving thermal power; wherein the third set time is equal to the difference between the first set time and the second set time;

the first input terminal of the first multiplier (32) is connected to the first operation unit (2), and the second input terminal of the first multiplier (32) is used for receiving the first set time;

the input terminal of the second multiplier (33) is connected to the output terminal of the first moving average module (31), and the second input terminal of the second multiplier (33) is configured to receive the third set time;

the minuend input terminal of the first subtractor (34) is connected to the output terminal of the first multiplier (32), the subtrahend input terminal of the first subtractor (34) is connected to the output terminal of the second multiplier (33), and the output terminal of the first subtractor (34) outputs the actual calorific value of the front end.

13. The control system for an electric power of a steam turbine generator of a nuclear power plant according to claim 11, wherein the third operation unit (4) comprises a second subtractor (41), a third multiplier (42), and a first adder (43);

the minuend input terminal of the second subtractor (41) is used for receiving a preset target average thermal power, and the subtrahend input terminal of the second subtractor (41) is connected to the first operation unit (2);

the first input terminal of the third multiplier (42) is connected to the output terminal of the second subtractor (41), and the second input terminal of the third multiplier (42) is used for receiving the first set time;

the first input terminal of the first adder (43) is connected to the output terminal of the third multiplier (42), the second input terminal of the first adder (43) is connected to the second operation unit (3) to receive the front end actual calorific value, and the output terminal of the first adder (43) outputs the predicted calorific value.

14. The control system for an electric power of a steam turbine generator of a nuclear power plant according to claim 11, wherein the fourth operation unit (5) comprises a first divider (51), an efficiency correction unit (52), and a fourth multiplier (53);

the dividend input terminal of the first divider (51) is connected to the third operation unit (4) to receive the predicted calorific value, and the divisor input terminal of the first divider (51) is used to receive a second set time;

the first input terminal of the fourth multiplier (53) is connected to the output terminal of the first divider (51), the second input terminal of the fourth multiplier (53) is connected to the efficiency correction unit (52) to receive the thermal efficiency factor output by the efficiency correction unit (52), and the output terminal of the fourth multiplier (53) outputs the electric power setting value.

15. The control system for an electric power of a steam turbine generator of a nuclear power plant according to claim 14, wherein the efficiency correction unit (52) comprises an electric power acquisition unit (521), a second divider (522), and a second moving average module (523);

the electric power acquisition unit (521) is used for acquiring the real-time electric power of the steam turbine generator;

the dividend input terminal of the second divider (522) is connected to the electric power acquisition unit (521) to receive the real-time electric power, and the divisor input terminal of the second divider (522) is connected to the thermal power acquisition unit (1) to receive the real-time thermal power;

the input terminal of the second moving average module (523) is connected to the output terminal of the second divider (522), the period setting terminal of the second moving average module (523) is used for receiving the second set time, and the output terminal of the second moving average module (523) outputs the thermal efficiency factor.

16. The control system for an electric power of a steam turbine generator of a nuclear power plant according to claim 12, further comprising: a timing setting unit (6);

the timing setting unit (6) is used for sending the electric power setting value to a power controller of the steam turbine generator based on a setting period.

17. The control system for an electric power of a steam turbine generator of a nuclear power plant according to claim 16, wherein the timing setting unit (6) comprises: an instruction unit (61) and a first selection module (62);

the instruction unit (61) is used for outputting a selection instruction every third set time and continuing for a certain time when the real-time moving thermal power does not exceed the preset overshoot band, and outputting the selection instruction every fifth set time and continuing for a certain time when the real-time moving thermal power exceeds the preset overshoot band; wherein the fifth set time is equal to one half of the third set time;

the first selection input terminal of the first selection module (62) is connected with the fourth operation unit (5) to receive the electric power setting value, the second selection input terminal of the first selection module (62) is connected with the output terminal of the first selection module (62), and the output terminal of the first selection module (62) can be connected with a power controller of the steam turbine generator; the selection terminal of the first selection module (62) is connected to the instruction unit (61) to receive the selection instruction.

18. The control system for an electric power of a steam turbine generator of a nuclear power plant according to claim 17, wherein the instruction unit (61) comprises a first comparator (621), a second comparator (622), a first OR gate (623), a NOT gate (624), an AND gate (625), a second OR gate (626), a first pulse module (627), a second pulse module (628), and a third pulse module (629);

the non-inverting input terminal of the first comparator (621) is connected to the first operation unit (2) to receive the real-time moving thermal power, and the inverting input terminal of the first comparator (621) is used to receive the upper limit value of the preset overshoot band;

the non-inverting input terminal of the second comparator (622) is used for receiving the lower limit value of the preset overshoot band, and the inverting input terminal of the second comparator (622) is connected to the first operation unit (2) to receive the real-time moving thermal power;

the first input terminal of the first OR gate (623) is connected to the output terminal of the first comparator (621), the second input terminal of the first OR gate (623) is connected to the output terminal of the second comparator (622), and the output terminal of the first OR gate (623) is connected to the first input terminal of the AND gate (625) through the NOT gate (624);

the enabling terminal of the first pulse module (627) is used for receiving a high level, the period setting terminal of the first pulse module (627) is used for receiving the second set time, and the output terminal of the first pulse module (627) is connected to the second input terminal of the AND gate (625); the output terminal of the AND gate (625) is connected to the first input terminal of the second OR gate (626);

the enabling terminal of the second pulse module (628) is connected to the output terminal of the first comparator (621), the period setting terminal of the second pulse module (628) is used for receiving the fifth set time, and the output terminal of the second pulse module (628) is connected to the second input terminal of the second OR gate (626);

the enabling terminal of the third pulse module (629) is connected to the output terminal of the second comparator (622), the period setting terminal of the third pulse module (629) is used for receiving the fifth set time, and the output terminal of the third pulse module (629) is connected to the third input terminal of the second OR gate (626); the output terminal of the second OR gate (626) outputs the selection instruction.

19. The control system for an electric power of a steam turbine generator of a nuclear power plant according to claim 11, further comprising: an emergency thermal power reduction unit (7);
the emergency thermal power reduction unit (7) is aused for outputting an emergency stop and temperature reduction instruction which is used for invalidating the electric power setting value and reducing the thermal power of the primary loop when the accumulated time of the real-time thermal power is longer than a preset early warning value exceeds a preset early warning time within the first set time.

20. The control system for an electric power of a steam turbine generator of a nuclear power plant according to claim 19, wherein, further comprising a timing unit (8) which including a third comparator (81), a fourth pulse module (82), a counting module (83), a fourth comparator (84), and a second selection module (85);
the non-inverting input terminal of the third comparator (81) is connected with the thermal power acquisition unit (1) to receive real-time thermal power, the inverting input terminal of the third comparator (81) is used for receiving a preset early warning value, and the output terminal of the third comparator (81) is connected with the first input terminal of the counting module (83); the enabling terminal of the fourth pulse module (82) is used for receiving a high level, the period setting terminal of the fourth pulse module (82) is used for receiving the first set time, and the output terminal of the fourth pulse module (82) is connected to the second input terminal of the counting module (83); the output terminal of the counting module (83) is connected to the non-inverting input terminal of the fourth comparator (84) and the first selection input terminal of the second selection module (85), and the inverting input terminal of the fourth comparator (84) is connected to the output terminal of the second selection module (85); the output terminal of the fourth comparator (84) is connected to the selection terminal of the second selection module (85), the second selection input terminal of the second selection module (85) is connected to the output terminal of the second selection module (85), and the output terminal of the second selection module (85), which serves as an accumulative time output terminal, is connected to the emergency thermal power reduction unit (7).

## Patentansprüche

1. Steuerungsverfahren für die elektrische Leistung eines Dampfturbinengenerators eines Kernkraftwerks, umfassend die Schritte:

   S10, Sammeln von Echtzeit-Wärmeleistung des Primärkreislaufs in einem Kernkraftwerk;
   S20, Berechnen der gleitenden Echtzeit-Wärmeleistung der Echtzeit-Wärmeleistung innerhalb einer ersten vorgegebenen Zeitspanne auf der Grundlage eines gleitenden Mittelwertverfahrens;
   S30, Durchführen eines Front-End-Brennwert-Berechnungsprozesses gemäß der gleitenden Echtzeit-Wärmeleistung und der Echtzeit-Wärmeleistung, um einen tatsächlichen Front-End-Brennwert zu erhalten;
   S40, Durchführen einer Brennwert-Prognoseoperation gemäß einer voreingestellten Soll-Durchschnittswärmeleistung, der gleitenden Echtzeit-Wärmeleistung und des tatsächlichen Front-End-Brennwerts, um einen Prognose-Brennwert zu erhalten;
   und S50, Durchführen einer Umwandlungs- und Wirkungsgrad-Korrekturberechnung auf der Grundlage des Prognose-Brennwerts, um einen Einstellwert für die elektrische Leistung zur Steuerung der elektrischen Leistung des Dampfturbinengenerators zu erhalten, und Zurückkehren zu S10.

2. Steuerungsverfahren für die elektrische Leistung eines Dampfturbinengenerators eines Kernkraftwerks nach Anspruch 1, wobei in S30 der Front-End-Brennwert-Berechnungsprozess umfasst:

   S301: Berechnen einer zweiten gleitenden Wärmeleistung der Echtzeit-Wärmeleistung innerhalb einer dritten vorgegebenen Zeitspanne auf der Grundlage eines gleitenden Mittelwertverfahrens, wobei die dritte vorgegebenen Zeitspanne der Differenz der ersten vorgegebenen Zeitspanne minus einer zweiten vorgegebenen Zeitspanne entspricht;
   S302, Multiplizieren der gleitenden Echtzeit-Wärmeleistung mit der ersten vorgegebenen Zeitspanne, um einen ersten Brennwert zu erhalten;
   S303, Multiplizieren der zweiten gleitenden Wärmeleistung mit der dritten vorgegebenen Zeitspanne, um einen zweiten Brennwert zu erhalten;
   S304: Subtrahieren des zweiten Brennwerts vom ersten Brennwert, um den tatsächlichen Front-End-Brennwert zu erhalten.

3. Steuerungsverfahren für die elektrische Leistung eines Dampfturbinengenerators eines Kernkraftwerks nach Anspruch 2, wobei in S40 der Ausdruck des Prognose-Brennwerts lautet:

$$Z_m = \left( \overline{P_0} - \overline{P_{m-1}} \right) * T + X_m;$$

wobei $Z_m$ der Prognose-Brennwert, $\overline{P_0}$ die voreingestellte Soll-Durchschnittswärmeleistung, $P_{m-1}$ die gleitende

Echtzeit-Wärmeleistung, T die erste vorgegebene Zeitspanne und $X_m$ der tatsächliche Front-End-Brennwert ist.

4. Steuerungsverfahren für die elektrische Leistung eines Dampfturbinengenerators eines Kernkraftwerks nach Anspruch 1, wobei in S50 der Ausdruck des Einstellwerts für die elektrische Leistung lautet:

$$P_s = \frac{Z_m}{\Delta t} * k;$$

wobei $P_s$ der Einstellwert für die elektrische Leistung, $Z_m$ der Prognose-Brennwert, $\Delta t$ eine zweite vorgegebene Zeitspanne und k ein thermischer Wirkungsgradfaktor ist.

5. Steuerungsverfahren für die elektrische Leistung eines Dampfturbinengenerators eines Kernkraftwerks nach Anspruch 4, wobei S50 ferner umfasst:

Erfassen der elektrischen Echtzeit-Leistung des Dampfturbinengenerators;
Durchführen einer Divisionsoperation an den Daten zum selben Zeitpunkt in der Echtzeit-Wärmeleistung und der elektrischen Echtzeit-Leistung, um Verhältnisdaten zu erhalten;
Berechnen eines gleitenden Verhältniskoeffizienten der Verhältnisdaten innerhalb der zweiten vorgegebenen Zeitspanne auf der Grundlage eines gleitenden Mittelwertverfahrens, wobei der gleitende Verhältniskoeffizient der thermische Wirkungsgradfaktor ist.

6. Steuerungsverfahren für die elektrische Leistung eines Dampfturbinengenerators eines Kernkraftwerks nach Anspruch 5, wobei der Schritt S50 ferner umfasst:
Begrenzen eines oberen Grenzwerts und eines unteren Grenzwerts des Einstellwerts für die elektrische Leistung gemäß einem thermischen Wirkungsgradfaktor und der voreingestellten Soll-Durchschnittswärmeleistung.

7. Steuerungsverfahren für die elektrische Leistung eines Dampfturbinengenerators eines Kernkraftwerks nach Anspruch 6, wobei der untere Grenzwert des Einstellwerts für die elektrische Leistung ausgedrückt wird durch:

$$\begin{cases} P_{smin} = \min\big(f(k_n), f(k_{n-1})\big) \\ f(k) = \min\big(H3, \overline{P_0} + C\big) * k \end{cases};$$

wobei $P_{smin}$ der untere Grenzwert des Einstellwerts für die elektrische Leistung ist, Funktion min die Funktion zur Ermittlung des Mindestwerts ist, $k_n$ der durch die aktuelle Berechnung erhaltene thermische Wirkungsgradfaktor ist, $k_{n-1}$ der durch die letzte Berechnung erhaltene thermische Wirkungsgradfaktor ist, H3 der Höchstwert der voreingestellten Echtzeit-Wärmeleistung ist, $\overline{P_0}$ die voreingestellte Soll-Durchschnittswärmeleistung ist und C eine voreingestellte Echtzeit-Wärmeleistungs-Regelgröße ist;
der Ausdruck für den oberen Grenzwert des Einstellwerts für die elektrische Leistung lautet:

$$P_{smax} = \big(2 * \overline{P_0} - \min(H3, \overline{P_0} + C)\big) * \max(k_n, k_{n-1});$$

wobei $P_{smax}$ der obere Grenzwert des Einstellwerts für die elektrische Leistung ist und max eine Funktion zur Ermittlung eines Höchstwerts ist.

8. Steuerungsverfahren für die elektrische Leistung eines Dampfturbinengenerators eines Kernkraftwerks nach Anspruch 1, wobei der Schritt S50 ferner umfasst:
Übermitteln des Einstellwerts für die elektrische Leistung an einen Leistungsregler des Dampfturbinengenerators auf der Grundlage einer Einstellperiode; wobei die Einstellperiode einer zweiten vorgegebenen Zeitspanne entspricht.

9. Steuerungsverfahren für die elektrische Leistung eines Dampfturbinengenerators eines Kernkraftwerks nach Anspruch 8, wobei S50 ferner umfasst:
Bestimmen, ob die gleitende Echtzeit-Wärmeleistung ein voreingestelltes Überschwingband überschreitet, und falls ja, Einstellen der Einstellperiode auf die Hälfte der zweiten vorgegebenen Zeitspanne, andernfalls Einstellen der Einstellperiode auf die zweite vorgegebene Zeitspanne.

**10.** Steuerungsverfahren für die elektrische Leistung eines Dampfturbinengenerators eines Kernkraftwerks nach Anspruch 1, ferner umfassend:
S11, Ungültigmachen des Einstellwerts für die elektrische Leistung und Verringern der Wärmeleistung des Primärkreislaufs sofort, wenn die akkumulierte Zeitspanne der Echtzeit-Wärmeleistung, die länger als ein voreingestellter Frühwarnwert ist, eine voreingestellte Frühwarnzeitspanne innerhalb der ersten vorgegebenen Zeitspanne überschreitet.

**11.** Steuerungssystem für die elektrische Leistung eines Dampfturbinengenerators eines Kernkraftwerks, umfassend:

eine Wärmeleistungserfassungseinheit (1), die zur Erfassung der Echtzeit-Wärmeleistung des Primärkreislaufs in einem Kernkraftwerk verwendet wird;
eine erste Bedieneinheit (2), die zur Berechnung der gleitenden Echtzeit-Wärmeleistung der Echtzeit-Wärmeleistung innerhalb einer ersten vorgegebenen Zeitspanne auf der Grundlage eines gleitenden Mittelwertverfahrens verwendet wird;
eine zweite Bedieneinheit (3), die zur Berechnung des Front-End-Brennwerts der gleitenden Echtzeit-Wärmeleistung und der Echtzeit-Wärmeleistung, um einen tatsächlichen Front-End-Brennwert auszugeben;
eine dritte Bedieneinheit (4), die zur Durchführung einer Brennwert-Prognoseoperation gemäß einer voreingestellten Soll-Durchschnittswärmeleistung, der gleitenden Echtzeit-Wärmeleistung und des tatsächlichen Front-End-Brennwerts verwendet wird, um einen Prognose-Brennwert auszugeben;
eine vierte Bedieneinheit (5), die zur Durchführung einer Umwandlungs- und Wirkungsgrad-Korrekturoperation auf der Grundlage des Prognose-Brennwerts verwendet wird, um einen Einstellwert für die elektrische Leistung zur Steuerung der elektrischen Leistung des Dampfturbinengenerators auszugeben.

**12.** Steuerungssystem für die elektrische Leistung eines Dampfturbinengenerators eines Kernkraftwerks nach Anspruch 11, wobei die zweite Bedieneinheit (3) ein erstes gleitendes Mittelwertmodul (31), einen ersten Multiplizierer (32), einen zweiten Multiplizierer (32) und einen ersten Subtrahierer (34) umfasst;

der Eingangsanschluss des ersten gleitenden Mittelwertmoduls (31) mit der Wärmeleistungserfassungseinheit (1) verbunden ist, um die Echtzeit-Wärmeleistung zu empfangen, der Perioden-Einstellanschluss des ersten gleitenden Mittelwertmoduls (31) zum Empfang einer dritten vorgegebenen Zeitspanne verwendet wird, und der Ausgangsanschluss des ersten gleitenden Mittelwertmoduls (31) eine zweite gleitende Wärmeleistung ausgibt;
wobei die dritte vorgegebene Zeitspanne der Differenz zwischen der ersten vorgegebenen Zeitspanne und der zweiten vorgegebenen Zeitspanne entspricht;
der erste Eingangsanschluss des ersten Multiplizierers (32) mit der ersten Bedieneinheit (2) verbunden ist, und der zweite Eingangsanschluss des ersten Multiplizierers (32) zum Empfangen der ersten vorgegebenen Zeitspanne verwendet wird;
der Eingangsanschluss des zweiten Multiplizierers (33) mit dem Ausgangsanschluss des ersten gleitenden Mittelwertmoduls (31) verbunden ist und der zweite Eingangsanschluss des zweiten Multiplizierers (33) derart ausgelegt ist, die dritte vorgegebene Zeitspanne zu empfangen;
der Minuenden-Eingangsanschluss des ersten Subtrahierers (34) mit dem Ausgangsanschluss des ersten Multiplizierers (32) verbunden ist, der Subtrahenden-Eingangsanschluss des ersten Subtrahierers (34) mit dem Ausgangsanschluss des zweiten Multiplizierers (33) verbunden ist und der Ausgangsanschluss des ersten Subtrahierers (34) den tatsächlichen Front-End-Brennwert ausgibt.

**13.** Steuerungssystem für die elektrische Leistung eines Dampfturbinengenerators eines Kernkraftwerks nach Anspruch 11, wobei die dritte Bedieneinheit (4) einen zweiten Subtrahierer (41), einen dritten Multiplizierer (42) und einen ersten Addierer (43) umfasst;

der Minuenden-Eingangsanschluss des zweiten Subtrahierers (41) zum Empfangen einer voreingestellten Soll-Durchschnittswärmeleistung verwendet wird und der Subtrahenden-Eingangsanschluss des zweiten Subtrahierers (41) mit der ersten Bedieneinheit (2) verbunden ist;
der erste Eingangsanschluss des dritten Multiplizierers (42) mit dem Ausgangsanschluss des zweiten Subtrahierers (41) verbunden ist und der zweite Eingangsanschluss des dritten Multiplizierers (42) zum Empfang der ersten vorgegebenen Zeitspanne verwendet wird;
der erste Eingangsanschluss des ersten Addierers (43) mit dem Ausgangsanschluss des dritten Multiplizierers (42) verbunden ist, der zweite Eingangsanschluss des ersten Addierers (43) mit der zweiten Bedieneinheit (3) verbunden ist, um den tatsächlichen Front-End-Brennwert zu empfangen, und der Ausgangsanschluss des ersten Addierers (43) den Prognose-Brennwert ausgibt.

14. Steuerungssystem für die elektrische Leistung eines Dampfturbinengenerators eines Kernkraftwerks nach Anspruch 11, wobei die vierte Bedieneinheit (5) einen ersten Divisor (51), eine Wirkungsgrad-Korrektureinheit (52) und einen vierten Multiplizierer (53) umfasst;

der Dividend-Eingangsanschluss des ersten Divisors (51) mit der dritten Bedieneinheit (4) verbunden ist, um den Prognose-Brennwert zu empfangen, und der Divisor-Eingangsanschluss des ersten Divisors (51) verwendet wird, um eine zweite vorgegebene Zeitspanne zu empfangen;

der erste Eingangsanschluss des vierten Multiplizierers (53) mit dem Ausgangsanschluss des ersten Divisors (51) verbunden ist, der zweite Eingangsanschluss des vierten Multiplizierers (53) mit der Wirkungsgrad-Korrektureinheit (52) verbunden ist, um den von der Wirkungsgrad-Korrektureinheit (52) ausgegebenen thermischen Wirkungsgradfaktor zu empfangen, und der Ausgangsanschluss des vierten Multiplizierers (53) den Einstellwert für die elektrische Leistung ausgibt.

15. Steuerungssystem für die elektrische Leistung eines Dampfturbinengenerators eines Kernkraftwerks nach Anspruch 14, wobei die Wirkungsgrad-Korrektureinheit (52) eine elektrische Leistungserfassungseinheit (521), einen zweiten Divisor (522) und ein zweites gleitendes Mittelwertmodul (523) umfasst;

die elektrische Leistungserfassungseinheit (521) zur Erfassung der elektrischen Echtzeit-Leistung des Dampfturbinengenerators verwendet wird;

der Dividend-Eingangsanschluss des zweiten Divisors (522) mit der elektrischen Leistungserfassungseinheit (521) verbunden ist, um die elektrische Echtzeit-Leistung zu empfangen, und der Divisor-Eingangsanschluss des zweiten Divisors (522) mit der Wärmeleistungserfassungseinheit (1) verbunden ist, um die Echtzeit-Wärmeleistung zu empfangen;

der Eingangsanschluss des zweiten gleitenden Mittelwertmoduls (523) mit dem Ausgangsanschluss des zweiten Divisors (522) verbunden ist, der Perioden-Einstellanschluss des zweiten gleitenden Mittelwertmoduls (523) zum Empfangen der zweiten vorgegebenen Zeitspanne verwendet wird und der Ausgangsanschluss des zweiten gleitenden Mittelwertmoduls (523) den thermischen Wirkungsgradfaktor ausgibt.

16. Steuerungssystem für die elektrische Leistung eines Dampfturbinengenerators eines Kernkraftwerks nach Anspruch 12, ferner umfassend: eine Zeiteinstelleinheit (6);
wobei die Zeiteinstelleinheit (6) zum Übermitteln des Einstellwerts für die elektrische Leistung an einen Leistungsregler des Dampfturbinengenerators auf der Grundlage einer Einstellperiode verwendet wird.

17. Steuerungssystem für die elektrische Leistung eines Dampfturbinengenerators eines Kernkraftwerks nach Anspruch 16, wobei die Zeiteinstelleinheit (6) umfasst: eine Anweisungseinheit (61) und ein erstes Auswahlmodul (62);

die Anweisungseinheit (61) zur Ausgabe einer Auswahlanweisung in jeder dritten vorgegebenen Zeitspanne über eine bestimmte Zeitspanne hinweg verwendet wird, wenn die gleitende Echtzeit-Wärmeleistung das voreingestellte Überschwingband nicht überschreitet, und zur Ausgabe der Auswahlanweisung in jeder fünften vorgegebenen Zeitspanne über eine bestimmte Zeitspanne hinweg verwendet wird, wenn die gleitende Echtzeit-Wärmeleistung das voreingestellte Überschwingband überschreitet; wobei die fünfte vorgegebene Zeitspanne der Hälfte der dritten vorgegebenen Zeitspanne entspricht;

der erste Auswahl-Eingangsanschluss des ersten Auswahlmoduls (62) mit der vierten Bedieneinheit (5) verbunden ist, um den Einstellwert für die elektrische Leistung zu empfangen, der zweite Auswahl-Eingangsanschluss des ersten Auswahlmoduls (62) mit dem Ausgangsanschluss des ersten Auswahlmoduls (62) verbunden ist und der Ausgangsanschluss des ersten Auswahlmoduls (62) mit einem Leistungsregler des Dampfturbinengenerators verbunden werden kann; der Auswahl-Eingangsanschluss des ersten Auswahlmoduls (62) mit der Anweisungseinheit (61) verbunden ist, um die Auswahlanweisung zu empfangen.

18. Steuerungssystem für die elektrische Leistung eines Dampfturbinengenerators eines Kernkraftwerks nach Anspruch 17, wobei die Anweisungseinheit (61) einen ersten Komparator (621), einen zweiten Komparator (622), ein erstes ODER-Gatter (623), ein NICHT-Gatter (624), ein UND-Gatter (625), ein zweites ODER-Gatter (626), ein erstes Impulsmodul (627), ein zweites Impulsmodul (628) und ein drittes Impulsmodul (629) umfasst;

der nichtinvertierende Eingangsanschluss des ersten Komparators (621) mit der ersten Bedieneinheit (2) verbunden ist, um die gleitende Echtzeit-Wärmeleistung zu empfangen, und der invertierende Eingangsanschluss des ersten Komparators (621) verwendet wird, um den oberen Grenzwert des voreingestellten Überschwingbands zu empfangen;

der nichtinvertierende Eingangsanschluss des zweiten Komparators (622) verwendet wird, um den unteren Grenzwert des voreingestellten Überschwingbands zu empfangen, und der invertierende Eingangsanschluss des zweiten Komparators (622) mit der ersten Bedieneinheit (2) verbunden ist, um die gleitende Echtzeit-Wärmeleistung zu empfangen;

der erste Eingangsanschluss des ersten ODER-Gatters (623) mit dem Ausgangsanschluss des ersten Komparators (621) verbunden ist, der zweite Eingangsanschluss des ersten ODER-Gatters (623) mit dem Ausgangsanschluss des zweiten Komparators (622) verbunden ist und der Ausgangsanschluss des ersten ODER-Gatters (623) mit dem ersten Eingangsanschluss des UND-Gatters (625) über das NICHT-Gatter (624) verbunden ist;

der Freigabeanschluss des ersten Impulsmoduls (627) zum Empfangen eines hohen Pegels verwendet wird, der Perioden-Einstellanschluss des ersten Impulsmoduls (627) zum Empfangen der zweiten vorgegebenen Zeitspanne verwendet wird und der Ausgangsanschluss des ersten Impulsmoduls (627) mit dem zweiten Eingangsanschluss des UND-Gatters (625) verbunden ist; der Ausgangsanschluss des UND-Gatters (625) mit dem ersten Eingangsanschluss des zweiten ODER-Gatters (626) verbunden ist; der Freigabeanschluss des zweiten Impulsmoduls (628) mit dem Ausgangsanschluss des ersten Komparators (621) verbunden ist, der Perioden-Einstellanschluss des zweiten Impulsmoduls (628) zum Empfangen der fünften vorgegebenen Zeitspanne verwendet wird und der Ausgangsanschluss des zweiten Impulsmoduls (628) mit dem zweiten Eingangsanschluss des zweiten ODER-Gatters (626) verbunden ist;

der Freigabeanschluss des dritten Impulsmoduls (629) mit dem Ausgangsanschluss des zweiten Komparators (622) verbunden ist, der Perioden-Einstellanschluss des dritten Impulsmoduls (629) zum Empfangen der fünften vorgegebenen Zeitspanne verwendet wird und der Ausgangsanschluss des dritten Impulsmoduls (629) mit dem dritten Eingangsanschluss des zweiten ODER-Gatters (626) verbunden ist;

der Ausgangsanschluss des zweiten ODER-Gatters (626) die Auswahlanweisung ausgibt.

19. Steuerungssystem für die elektrische Leistung eines Dampfturbinengenerators eines Kernkraftwerks nach Anspruch 11, ferner umfassend: eine Not-Wärmeleistungsreduzierungseinheit (7) ;

wobei die Not-Wärmeleistungsreduzierungseinheit (7) zur Ausgabe einer Not-Stopp- und Temperaturreduzierungsanweisung, die zur Ungültigmachung des Einstellwerts für die elektrische Leistung und Reduzierung der Wärmeleistung des Primärkreislaufs verwendet wird, wenn die akkumulierte Zeitspanne der Echtzeit-Wärmeleistung, die länger als ein voreingestellter Frühwarnwert ist, eine voreingestellte Frühwarnzeitspanne innerhalb der ersten vorgegebenen Zeitspanne überschreitet.

20. Steuerungssystem für die elektrische Leistung eines Dampfturbinengenerators eines Kernkraftwerks nach Anspruch 19, ferner umfassend eine Zeiteinheit (8) mit einem dritten Komparator (81), einem vierten Impulsmodul (82), einem Zählmodul (83), einem vierten Komparator (84) und einem zweiten Auswahlmodul (85);

wobei der nichtinvertierende Eingangsanschluss des dritten Komparators (81) mit der Wärmeleistungserfassungseinheit (1) verbunden ist, um die Echtzeit-Wärmeleistung zu erfassen, der invertierende Eingangsanschluss des dritten Komparators (81) zum Empfang eines voreingestellten Frühwarnwerts verwendet wird und der Ausgangsanschluss des dritten Komparators (81) mit dem ersten Eingangsanschluss des Zählmoduls (83) verbunden ist; der Freigabeanschluss des vierten Impulsmoduls (82) zum Empfang eines hohen Pegels verwendet wird, der Perioden-Einstellanschluss des vierten Impulsmoduls (82) zum Empfang der ersten vorgegebenen Zeitspanne verwendet wird und der Ausgangsanschluss des vierten Impulsmoduls (82) mit dem zweiten Eingangsanschluss des Zählmoduls (83) verbunden ist; der Ausgangsanschluss des Zählmoduls (83) mit dem nichtinvertierenden Eingangsanschluss des vierten Komparators (84) und dem ersten Auswahl-Eingangsanschluss des zweiten Auswahlmoduls (85) verbunden ist und der invertierende Eingangsanschluss des vierten Komparators (84) mit dem Ausgangsanschluss des zweiten Auswahlmoduls (85) verbunden ist; der Ausgangsanschluss des vierten Komparators (84) mit dem Auswahlanschluss des zweiten Auswahlmoduls (85) verbunden ist, der zweite Auswahl-Eingangsanschluss des zweiten Auswahlmoduls (85) mit dem Ausgangsanschluss des zweiten Auswahlmoduls (85) verbunden ist und der Ausgangsanschluss des zweiten Auswahlmoduls (85), der als Ausgangsanschluss der akkumulierten Zeitspanne dient, mit der Not-Wärmeleistungsreduzierungseinheit (7) verbunden ist.

## Revendications

1. Procédé de commande pour l'alimentation électrique d'un générateur à turbine à vapeur d'une centrale nucléaire, comprenant les étapes suivantes :

S10, collecte de la puissance thermique en temps réel du circuit primaire d'une centrale nucléaire ;
S20, calcul de la puissance thermique mobile en temps réel de la puissance thermique en temps réel dans un premier temps défini sur la base d'une méthode de la moyenne mobile ;

S30, réalisation du processus de calcul de la valeur calorifique initiale en fonction de la puissance thermique mobile en temps réel et de la puissance thermique en temps réel pour obtenir la valeur calorifique réelle initiale ;

S40, réalisation de l'opération de prédiction de la valeur calorifique en fonction d'une puissance thermique moyenne cible prédéfinie, de la puissance thermique mobile en temps réel et de la valeur calorifique réelle initiale pour obtenir une valeur calorifique prévue ;

et S50, réalisation d'un calcul de conversion et de correction de rendement sur la base de la valeur calorifique prévue pour obtenir une valeur de consigne d'alimentation électrique pour commander l'alimentation électrique du générateur à turbine à vapeur, et retour à S10.

2. Procédé de commande pour l'alimentation électrique d'un générateur à turbine à vapeur d'une centrale nucléaire selon la revendication 1, dans lequel, à l'étape S30, le processus de calcul de la valeur calorifique initiale comprend les étapes suivantes :

S301, calcul d'une seconde puissance thermique mobile de la puissance thermique en temps réel dans un troisième temps défini sur la base d'une méthode de la moyenne mobile, dans laquelle le troisième temps défini est égal à une différence entre le premier temps défini moins un second temps défini ;

S302, multiplication de la puissance thermique mobile en temps réel par le premier temps défini pour obtenir une première valeur calorifique ;

S303, multiplication de la seconde puissance thermique mobile par le troisième temps défini pour obtenir une seconde valeur calorifique ;

S304, soustraction de la seconde valeur calorifique de la première valeur calorifique pour obtenir la valeur calorifique réelle initiale.

3. Procédé de commande pour l'alimentation électrique d'un générateur à turbine à vapeur d'une centrale nucléaire selon la revendication 2, dans lequel, à l'étape S40, l'expression de la valeur calorifique prévue est :

$$Z_m = \left( \overline{P_0} - \overline{P_{m-1}} \right) * \quad T + X_m;$$

dans laquelle $Z_m$ est la valeur calorifique prévue, $\overline{P_0}$ est la puissance thermique moyenne cible prédéfinie, $\overline{P_{m-1}}$ est la puissance thermique mobile en temps réel, T est le premier temps défini et $X_m$ est la valeur calorifique réelle initiale.

4. Procédé de commande pour l'alimentation électrique d'un générateur à turbine à vapeur d'une centrale nucléaire selon la revendication 1, dans lequel, à l'étape S50, l'expression de la valeur de consigne de l'alimentation électrique est :

$$P_s = \frac{Z_m}{\Delta t} * k;$$

Où $P_s$ est la valeur de consigne de l'alimentation électrique, $Z_m$ est la valeur calorifique prévue. $\Delta t$ est un deuxième temps défini, et k est un facteur de rendement thermique.

5. Procédé de commande pour l'alimentation électrique d'un générateur à turbine à vapeur d'une centrale nucléaire selon la revendication 4, dans lequel l'étape S50 comprend également :

l'acquisition de l'alimentation électrique en temps réel du générateur à turbine à vapeur ;

la réalisation d'une opération de division sur les données au même moment dans la puissance thermique en temps réel et l'alimentation électrique en temps réel pour obtenir des données proportionnelles ;

le calcul d'un coefficient de proportion mobile des données proportionnelles dans le deuxième temps défini sur la base d'une méthode de la moyenne mobile, le coefficient de proportion mobile étant le facteur de rendement thermique.

6. Procédé de commande pour l'alimentation électrique d'un générateur à turbine à vapeur d'une centrale nucléaire selon la revendication 5, dans lequel l'étape S50 comprend également :

la limitation d'une valeur limite supérieure et d'une valeur limite inférieure de la valeur de consigne de l'alimentation électrique en fonction d'un facteur de rendement thermique et de la puissance thermique moyenne cible prédéfinie.

**7.** Procédé de commande pour l'alimentation électrique d'un générateur à turbine à vapeur d'une centrale nucléaire selon la revendication 6, dans lequel la valeur limite inférieure de la valeur de consigne de l'alimentation électrique est exprimée par :

$$\begin{cases} P_{smin} = \min\big(f\,(k_n),\, f(k_{n-1})\big) \\ \quad f(k) = \min\big(H3, \overline{P_0} + C\big) * k \end{cases};$$

dans laquelle, $P_{smin}$ est la valeur limite inférieure de la valeur de consigne de l'alimentation électrique, la fonction min est la fonction permettant de prendre la valeur minimale, $k_n$ est le facteur de rendement thermique obtenu par le calcul actuel, $k_{n-1}$ est le facteur de rendement thermique obtenu par le dernier calcul, H3 est la valeur maximale de la puissance thermique prédéfinie en temps réel, $\overline{P_0}$ est la puissance thermique moyenne cible prédéfinie, et C est une quantité de régulation de puissance thermique prédéfinie en temps réel ;
l'expression de la valeur limite supérieure de la valeur de consigne de l'alimentation électrique est :

$$P_{smax} = \big(2 * \overline{P_0} - \min(H3, \overline{P_0} + C)\big) * \max(k_n, k_{n-1});$$

dans laquelle, $P_{smax}$ est la valeur limite supérieure de la valeur de consigne de l'alimentation électrique, et le max est une fonction prenant une valeur maximale.

**8.** Procédé de commande pour l'alimentation électrique d'un générateur à turbine à vapeur d'une centrale nucléaire selon la revendication 1, dans lequel l'étape S50 comprend également :
l'envoi de la valeur de consigne d'alimentation électrique à un contrôleur d'alimentation du générateur à turbine à vapeur sur la base d'une période de consigne ; dans lequel la période de consigne est égale à un deuxième temps défini.

**9.** Procédé de commande pour l'alimentation électrique d'un générateur à turbine à vapeur d'une centrale nucléaire selon la revendication 8, dans lequel l'étape S50 comprend également :
la détermination de savoir si la puissance thermique mobile en temps réel dépasse une plage de dépassement prédéfinie ; si c'est le cas, la fixation de la période de consigne à la moitié du deuxième temps défini, sinon, la fixation de la période de consigne au deuxième temps défini.

**10.** Procédé de commande pour l'alimentation électrique d'un générateur à turbine à vapeur d'une centrale nucléaire selon la revendication 1, comprenant également l'étape suivante :
S11, invalidation de la valeur de consigne de l'alimentation électrique et réduction immédiate de la puissance thermique de la boucle primaire, lorsque le temps cumulé de la puissance thermique en temps réel plus longue qu'une valeur d'alerte précoce prédéfinie dépasse un temps d'alerte précoce prédéfini au cours du premier temps défini.

**11.** Système de commande pour l'alimentation électrique d'un générateur à turbine à vapeur d'une centrale nucléaire, comprenant :

une unité d'acquisition de puissance thermique (1), qui est utilisée pour acquérir la puissance thermique en temps réel de la boucle primaire dans une centrale nucléaire ;
une première unité opérationnelle (2), qui est utilisée pour calculer la puissance thermique mobile en temps réel de la puissance thermique en temps réel dans un premier temps défini sur la base d'une méthode de la moyenne mobile ;
une deuxième unité opérationnelle (3), qui est utilisée pour calculer la valeur calorifique initiale de la puissance thermique mobile en temps réel et de la puissance thermique en temps réel pour obtenir une valeur calorifique réelle initiale ;
une troisième unité opérationnelle (4), qui est utilisée pour réaliser une opération de prédiction de la valeur calorifique en fonction d'une puissance thermique moyenne cible prédéfinie, de la puissance thermique mobile en temps réel et de la valeur calorifique réelle initiale pour obtenir une valeur calorifique prévue ;
une quatrième unité opérationnelle (5), qui est utilisée pour réaliser des opérations de conversion et de correction de rendement sur la base de la valeur calorifique prévue pour obtenir une valeur de consigne d'alimentation électrique pour commander l'alimentation électrique du générateur à turbine à vapeur.

**12.** Système de commande pour l'alimentation électrique d'un générateur à turbine à vapeur d'une centrale nucléaire selon la revendication 11, dans lequel la deuxième unité opérationnelle (3) comprend un premier module de la moyenne mobile (31), un premier multiplicateur (32), un deuxième multiplicateur (32) et un premier soustracteur (34) ;

la borne d'entrée du premier module de la moyenne mobile (31) est connectée à l'unité d'acquisition de puissance thermique (1) pour recevoir la puissance thermique en temps réel, la borne de réglage de période du premier module de la moyenne mobile (31) est utilisée pour recevoir un troisième temps défini, et la borne de sortie du premier module de la moyenne mobile (31) produit une seconde puissance thermique mobile, dans laquelle le troisième temps défini est égal à la différence entre le premier temps défini et le deuxième temps défini ;
la première borne d'entrée du premier multiplicateur (32) est connectée à la première unité opérationnelle (2), et la deuxième borne d'entrée du premier multiplicateur (32) est utilisée pour recevoir le premier temps défini ;
la borne d'entrée du deuxième multiplicateur (33) est connectée à la borne de sortie du premier module de la moyenne mobile (31), et la deuxième borne d'entrée du deuxième multiplicateur (33) est configurée pour recevoir le troisième temps défini ;
la borne d'entrée diminuende du premier soustracteur (34) est connectée à la borne de sortie du premier multiplicateur (32), la borne d'entrée diminuteur du premier soustracteur (34) est connectée à la borne de sortie du deuxième multiplicateur (33), et la borne de sortie du premier soustracteur (34) produit la valeur calorifique réelle initiale.

13. Système de commande pour l'alimentation électrique d'un générateur à turbine à vapeur d'une centrale nucléaire selon la revendication 11, dans lequel la troisième unité opérationnelle (4) comprend un second soustrateur (41), un troisième multiplicateur (42) et un premier additionneur (43) ;

la borne d'entrée de diminuende du second soustracteur (41) est utilisée pour recevoir une puissance thermique moyenne cible prédéfinie, et la borne d'entrée de diminuteur du second soustracteur (41) est connectée à la première unité opérationnelle (2) ;
la borne d'entrée du troisième multiplicateur (42) est connectée à la borne de sortie du second soustrateur (41), et la deuxième borne d'entrée du troisième multiplicateur (42) est utilisée pour recevoir le premier temps défini ;
la première borne d'entrée du premier additionneur (43) est connectée à la borne de sortie du troisième multiplicateur (42), la deuxième borne d'entrée du premier additionneur (43) est connectée à la deuxième unité opérationnelle (3) pour recevoir la valeur calorifique réelle initiale, et la borne de sortie du premier additionneur (43) produit la valeur calorifique prévue.

14. Système de commande pour l'alimentation électrique d'un générateur à turbine à vapeur d'une centrale nucléaire selon la revendication 11, dans lequel la quatrième unité opérationnelle (5) comprend un premier diviseur (51), une unité de correction de rendement (52), et un quatrième multiplicateur (53) ;

la borne d'entrée dividende du premier diviseur (51) est connectée à la troisième unité opérationnelle (4) pour recevoir la valeur calorifique prévue, et la borne d'entrée diviseur du premier diviseur (51) est utilisée pour recevoir un deuxième temps défini ;
la première borne d'entrée du quatrième multiplicateur (53) est connectée à la borne de sortie du premier diviseur (51), la deuxième borne d'entrée du quatrième multiplicateur (53) est connectée à l'unité de correction de rendement (52) pour recevoir le facteur de rendement thermique produit par l'unité de correction de rendement (52), et la borne de sortie du quatrième multiplicateur (53) produit la valeur de consigne de l'alimentation électrique.

15. Système de commande pour l'alimentation électrique d'un générateur à turbine à vapeur d'une centrale nucléaire selon la revendication 14, dans lequel l'unité de correction de rendement (52) comprend une unité d'acquisition d'alimentation électrique (521), un second diviseur (522), et un second module de la moyenne mobile (523) ;

l'unité d'acquisition d'alimentation électrique (521) est utilisée pour acquérir l'alimentation électrique en temps réel du générateur à turbine à vapeur ;
la borne d'entrée dividende du second diviseur (522) est connectée à l'unité d'acquisition d'alimentation électrique (521) pour recevoir l'alimentation électrique en temps réel, et la borne d'entrée diviseur du second diviseur (522) est connectée à l'unité d'acquisition de puissance thermique (1) pour recevoir la puissance thermique en temps réel ;
la borne d'entrée du second module de la moyenne mobile (523) est connectée à la borne de sortie du second diviseur (522), la borne de réglage de période du second module de la moyenne mobile (523) est utilisée pour recevoir le deuxième temps défini, et la borne de sortie du second module de la moyenne mobile (523) produit le facteur de rendement thermique.

**16.** Système de commande pour l'alimentation électrique d'un générateur à turbine à vapeur d'une centrale nucléaire selon la revendication 12, comprenant également : une unité de réglage de synchronisation (6) ;
l'unité de réglage de synchronisation (6) est utilisée pour envoyer la valeur de consigne d'alimentation électrique à un contrôleur d'alimentation du générateur à turbine à vapeur sur la base d'une période de consigne.

**17.** Système de commande pour l'alimentation électrique d'un générateur à turbine à vapeur d'une centrale nucléaire selon la revendication 16, dans lequel l'unité de réglage de synchronisation (6) comprend : une unité d'instruction (61) et un premier module de sélection (62) ;

l'unité d'instruction (61) est utilisée pour émettre une instruction de sélection tous les trois temps définis et continuer pendant un certain temps lorsque la puissance thermique mobile en temps réel ne dépasse pas la bande de dépassement prédéfinie, et émettre l'instruction de sélection tous les cinq temps définis et continuer pendant un certain temps lorsque la puissance thermique mobile en temps réel dépasse la bande de dépassement prédéfinie ; dans lequel le cinquième temps défini est égal à la moitié du troisième temps défini ;
la première borne d'entrée de sélection du premier module de sélection (62) est connectée à la quatrième unité opérationnelle (5) pour recevoir la valeur de consigne d'alimentation électrique, la deuxième borne d'entrée de sélection du premier module de sélection (62) est connectée à la borne de sortie du premier module de sélection (62), et la borne de sortie du premier module de sélection (62) peut être connectée à un contrôleur d'alimentation du générateur à turbine à vapeur ; la borne de sélection du premier module de sélection (62) est connectée à l'unité d'instruction (61) pour recevoir l'instruction de sélection.

**18.** Système de commande pour l'alimentation électrique d'un générateur à turbine à vapeur d'une centrale nucléaire selon la revendication 17, dans lequel l'unité d'instruction (61) comprend un premier comparateur (621), un deuxième comparateur (622), une première porte OU (623), une porte NON (624), une porte ET (625), une seconde porte OU (626), un premier module d'impulsion (627), un deuxième module d'impulsion (628) et un troisième module d'impulsion (629) ;

la borne d'entrée non inverseuse du premier comparateur (621) est connectée à la première unité opérationnelle (2) pour recevoir la puissance thermique mobile en temps réel, et la borne d'entrée inverseuse du premier comparateur (621) est utilisée pour recevoir la valeur limite supérieure de la bande de dépassement prédéfinie ;
la borne d'entrée non inverseuse du deuxième comparateur (622) est utilisée pour recevoir la valeur limite inférieure de la bande de dépassement prédéfinie, et la borne d'entrée inverseuse du deuxième comparateur (622) est connectée à la première unité opérationnelle (2) pour recevoir la puissance thermique mobile en temps réel ;
la première borne d'entrée de la première porte OU (623) est connectée à la borne de sortie du premier comparateur (621), la deuxième borne d'entrée de la première porte OU (623) est connectée à la borne de sortie du deuxième comparateur (622), et la borne de sortie de la première porte OU (623) est connectée à la première borne d'entrée de la porte ET (625) par la porte NON (624) ;
la borne d'activation du premier module d'impulsion (627) est utilisée pour recevoir un niveau haut, la borne de réglage de période du premier module d'impulsion (627) est utilisée pour recevoir le deuxième temps défini, et la borne de sortie du premier module d'impulsion (627) est connectée à la deuxième borne d'entrée de la porte ET (625) ; la borne de sortie de la porte ET (625) est connectée à la première borne d'entrée de la seconde porte OU (626) ;
la borne d'activation du deuxième module d'impulsion (628) est connectée à la borne de sortie du premier comparateur (621), la borne de réglage de période du deuxième module d'impulsion (628) est utilisée pour recevoir le cinquième temps défini, et la borne de sortie du deuxième module d'impulsion (628) est connectée à la deuxième borne d'entrée de la seconde porte OU (626) ;
la borne d'activation du troisième module d'impulsion (629) est connectée à la borne de sortie du deuxième comparateur (622), la borne de réglage de période du troisième module d'impulsion (629) est utilisée pour recevoir le cinquième temps défini, et la borne de sortie du troisième module d'impulsion (629) est connectée à la troisième borne d'entrée de la seconde porte OU (626) ;
la borne de sortie de la seconde porte OU (626) émet l'instruction de sélection.

**19.** Système de commande pour l'alimentation électrique d'un générateur à turbine à vapeur d'une centrale nucléaire selon la revendication 11, comprenant également : une unité de réduction de puissance thermique d'urgence (7) ;
l'unité de réduction de puissance thermique d'urgence (7) est utilisée pour produire un arrêt d'urgence et émettre une instruction de réduction de température qui est utilisée pour invalider la valeur de consigne d'alimentation électrique et réduire la puissance thermique de la boucle primaire, lorsque le temps cumulé de la puissance thermique en temps réel est plus longue qu'une valeur d'alerte précoce prédéfinie et dépasse un temps d'alerte précoce prédéfini au cours du premier temps défini.

20. Système de commande pour l'alimentation électrique d'un générateur à turbine à vapeur d'une centrale nucléaire selon la revendication 19, comprenant également une unité de synchronisation (8) qui inclut un troisième comparateur (81), un quatrième module d'impulsion (82), un module de comptage (83), un quatrième comparateur (84) et un second module de sélection (85) ;

la borne d'entrée non inverseuse du troisième comparateur (81) est connectée à l'unité d'acquisition de puissance thermique (1) pour recevoir la puissance thermique en temps réel, la borne d'entrée inverseuse du troisième comparateur (81) est utilisée pour recevoir une valeur d'alerte précoce prédéfinie, et la borne de sortie du troisième comparateur (81) est connectée à la première borne d'entrée du module de comptage (83) ; la borne d'activation du quatrième module d'impulsion (82) est utilisée pour recevoir un niveau haut, la borne de réglage de période du quatrième module d'impulsion (82) est utilisée pour recevoir le premier temps défini, et la borne de sortie du quatrième module d'impulsion (82) est connectée à la deuxième borne d'entrée du module de comptage (83) ; la borne de sortie du module de comptage (83) est connectée à la borne d'entrée non inverseuse du quatrième comparateur (84) et à la première borne d'entrée de sélection du second module de sélection (85), et la borne d'entrée inverseuse du quatrième comparateur (84) est connectée à la borne de sortie du second module de sélection (85) ; la borne de sortie du quatrième comparateur (84) est connectée à la borne de sélection du second module de sélection (85), la seconde borne d'entrée de sélection du deuxième module de sélection (85) est connectée à la borne de sortie du second module de sélection (85), et la borne de sortie du second module de sélection (85), qui sert de borne de sortie de temps cumulatif, est connectée à l'unité de réduction de puissance thermique d'urgence (7).

Start

S10

collecting a real-time thermal power of the primary loop in a nuclear power plant.

S20

calculating the real-time moving thermal power of the real-time thermal power in a first set time based on a moving average method.

S30

performing front-end calorific value calculatIon processing to the real-time moving thermal power and the real-time thermal power to obtain front-end actual calorific value.

S40

performing calorific value prediction operation according to a preset target average thermal power, the real-time moving thermal power and the front-end actual calorific value to obtain a predicted calorific value;

S50

performing conversion and efficiency correction operations based on the predicted calorific value , and obtaining an electric power setting value for controlling the electric power of the steam turbine generator

Fig 1

S301

calculating a second moving thermal power of the real-time thermal power in a third set time based on a moving average method;

S302

multiplying the real-time moving thermal power by the first set time to obtain a first calorific value;

S303

multiplying the second moving thermal power by the third set time to obtain a second calorific value;

S304

subtracting the second calorific value from the first calorific value to obtain the front-end actual calorific value.

Fig 2

Real-time
thermal power

t0    t1                                    t3    t

X

Y

Z

Fig 3

Fig 4

```
┌──────────────────┐        ┌──────────────────┐
│  timing unit 8   │        │  primary loop    │
└──────────────────┘        └──────────────────┘
         │                           │
         ▼                           ▼
┌──────────────────┐        ┌──────────────────┐
│ emergency thermal│ ◄──────│  thermal power   │
│ power reduction  │        │ acquisition unit 1│
│     unit 7       │        └──────────────────┘
└──────────────────┘
```

timing unit 8

primary loop

emergency thermal power reduction unit 7

thermal power acquisition unit 1

first operation unit 2

second operation unit 3

third operation unit 4

fourth operation unit 5

timing setting unit 6

turbo-generator

Fig 5

Fig 6

Fig 7

Fig 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5745382 A
- CN 112086214 A
- CN 103559918 A